(19) **Europäisches Patentamt**

**European Patent Office**

**Office européen des brevets**

(11) **EP 1 391 595 B1**

(12) **EUROPEAN PATENT SPECIFICATION**

(45) Date of publication and mention
of the grant of the patent:
**02.11.2005   Bulletin 2005/44**

(51) Int Cl.⁷: **F02B 37/04**, F02B 37/14,
F02B 39/10

(21) Application number: **03017873.5**

(22) Date of filing: **05.08.2003**

(54) **Supercharger for internal combustion engine**

Lader für Brennkraftmaschinen

Surcompresseur pour moteurs à combustion interne

(84) Designated Contracting States:
**DE FR GB**

(30) Priority: **20.08.2002   JP 2002238894**
**22.11.2002   JP 2002338999**
**21.02.2003   JP 2003044794**
**24.01.2003   JP 2003016201**
**30.01.2003   JP 2003021667**

(43) Date of publication of application:
**25.02.2004   Bulletin 2004/09**

(73) Proprietor: **NISSAN MOTOR CO., LTD.**
**Yokohama-shi, Kanagawa (JP)**

(72) Inventors:
• **Kawamura, Katsuhiko**
**Yokohama-shi, Kanagawa 231-0023 (JP)**
• **Fujimura, Kenichi**
**Yokohama-shi, Kanagawa 221-0001 (JP)**
• **Ikegami, Ryou**
**Yokohama-shi, Kanagawa 221-0001 (JP)**
• **Kubo, Susumu**
**Yokohama-shi, Kanagawa 241-0005 (JP)**
• **Kadooka, Hideharu**
**Yokohama-shi, Kanagawa 224-0029 (JP)**
• **Shimada, Satoshi**
**Kanagawa 242-0024 (JP)**
• **Mishima, Naoki**
**Yokohama-shi, Kanagawa 221-0001 (JP)**
• **Hattori, Motoyuki**
**Yokohama-shi, Kanagawa 221-0001 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 1 070 837          DE-A- 19 708 721
DE-A- 19 905 112        US-A- 4 669 269
US-A- 6 062 026

EP 1 391 595 B1

## Description

The invention relates to a supercharging device for an internal combustion engine according to the preamble portion of claim 1.

Such a supercharging device is known, e.g. from DE 199 05 112 A1. Besides, JP2002-021573A published by the Japanese Patent Office in 2002 discloses a turbocharger and an electric supercharger used together for an internal combustion engine for vehicles, in order to obtain a desirable supercharging performance.

The electric supercharger comprised a compressor driven by an electric motor, this compressor and the compressor of the turbocharger being arranged in series in an engine intake passage.

JP2000-230427A published by the Japanese Patent Office in 2000 discloses an electric supercharger in the intake passage of an internal combustion engine, and a bypass valve which bypasses the electric supercharger. The bypass valve is closed when the electric supercharger is operated, i.e., during supercharging, and is opened when the electric supercharger is not operated, i.e., during natural aspiration.

Due to the fact that the turbocharger drives the compressor using engine exhaust gas energy, a delay referred to as a turbo lag is produced in the supercharging response during engine acceleration. The electric supercharger drives the compressor using electrical energy, so the response is faster than that of the turbocharger, but it cannot be avoided that a certain amount of lag arises due to rotational inertia resistance of rotation components with respect to the timing they start rotation and the timing the rotation speed reaches the required speed for supercharging.

In the period equivalent to this lag when the turbocharger and electric supercharger are connected in series, the electric supercharger conversely becomes a resistance to intake air, lowers the engine intake air amount compared to the natural intake air amount, and interferes with engine acceleration.

As a countermeasure against this drawback, it is possible to provide a bypass valve as disclosed in JP2000-230427A. However, if the opening and closing of the bypass valve is simply interlocked with the operation of the electric supercharger as in JP2000-230427A, as the bypass valve closes simultaneously with startup of the electric supercharger, there is the problem that the intake air amount decreases temporarily due to the resistance to intake air presented by the electric supercharger immediately after startup, i.e., the problem is not resolved. Moreover, as the bypass valve opens simultaneously with the operation stop of the electric supercharger, the intake air supercharged by the electric supercharger escapes from the bypass valve upstream, and the engine intake air amount decreases rapidly. Such a rapid decrease of intake air amount results in undesirable changes to the engine output torque or the air-fuel ratio of the air-fuel mixture supplied to the engine.

Further in the supercharging device according to DE 199 05 112 A1, the controlling of the second charger may be performed directly via the engine or via a separate driving unit, according to the detection of a minimum pressure in the intake passage which starts and stops the operation of the second charger. Such a general way of controlling the second charger still does not lead to a desired engine operating condition due to relatively sudden changes in intake air volume provided to the engine.

It is therefore an object of this invention to further optimize the supercharging response of a supercharging device using a turbocharger and an electric supercharger together.

For a supercharging device of the above kind this object is solved in an inventive manner by the characterizing features of claim 1.

Further preferred embodiments of the invention are subject to the subclaims.

The details as well as other features and advantages of this invention are set forth in the remainder of the specification and are shown in the accompanying drawings, wherein:

FIG. 1 is a schematic diagram of an internal combustion engine provided with a supercharging device.

FIG. 2 is a flowchart describing an initial supercharging control routine performed by the controller.

FIG. 3 is a diagram describing the operation characteristics of an electric motor used in the electric supercharger.

FIG. 4 is similar to FIG. 1, but showing a second embodiment.

FIG. 5 is similar to FIG. 2, but showing the second embodiment.

FIG. 6 is a schematic diagram of an internal combustion engine provided with a supercharging device according to a third embodiment.

FIG. 7 is a schematic diagram of an electric supercharger according to a fourth embodiment.

FIG. 8 is a schematic diagram of an internal combustion engine provided with a supercharging device according to a fifth embodiment.

FIG. 9 is a schematic diagram of an internal combustion engine provided with a supercharging device according to a sixth embodiment.

FIG. 10 is a flowchart describing an initial supercharging control routine performed by a controller according to a seventh embodiment of this invention.

FIG. 11 is a flowchart describing a subroutine for calculating a predicted rotation speed $NF$ performed by the controller according to the seventh embodiment of this invention.

FIG. 12 is a diagram describing the characteristics of a map of a rotation increase rate estimation value $\Delta NMAP$ stored by the controller according to the seventh embodiment of this invention.

FIGs. 13A-13E are timing charts describing the starting of an electric motor and the closure timing of a bypass valve according to the seventh embodiment of this invention.

FIG. 14 is a diagram describing the characteristics of a map of a reference rotation increase rate estimation value $\Delta N0$ stored by the controller according to the seventh embodiment of this invention.

FIG. 15 is a diagram describing the characteristics of a map of a reference current value 10 stored by the controller according to the seventh embodiment of this invention.

FIG. 16 is a diagram describing the characteristics of a map of a reference voltage value $V0$ stored by the controller according to the seventh embodiment of this invention.

FIG. 17 is a diagram describing the characteristics of a rotation speed difference $\Delta N$ set by a controller according to an eighth embodiment of this invention.

FIG. 18 is a schematic diagram of an internal combustion engine provided with a supercharging device according to a ninth embodiment of this invention.

FIG. 19 is a flowchart describing a fault diagnosis routine in the steady state performed by the controller according to the ninth embodiment of this invention.

FIG. 20 is a flowchart describing a fault diagnosis routine immediately after stopping supercharging performed by the controller according to the ninth embodiment of this invention.

FIG. 21 is a flowchart describing a fault processing routine performed by the controller according to the ninth embodiment of this invention.

FIG. 22 is a flowchart describing a fault processing routine performed by a controller according to a tenth embodiment of this invention.

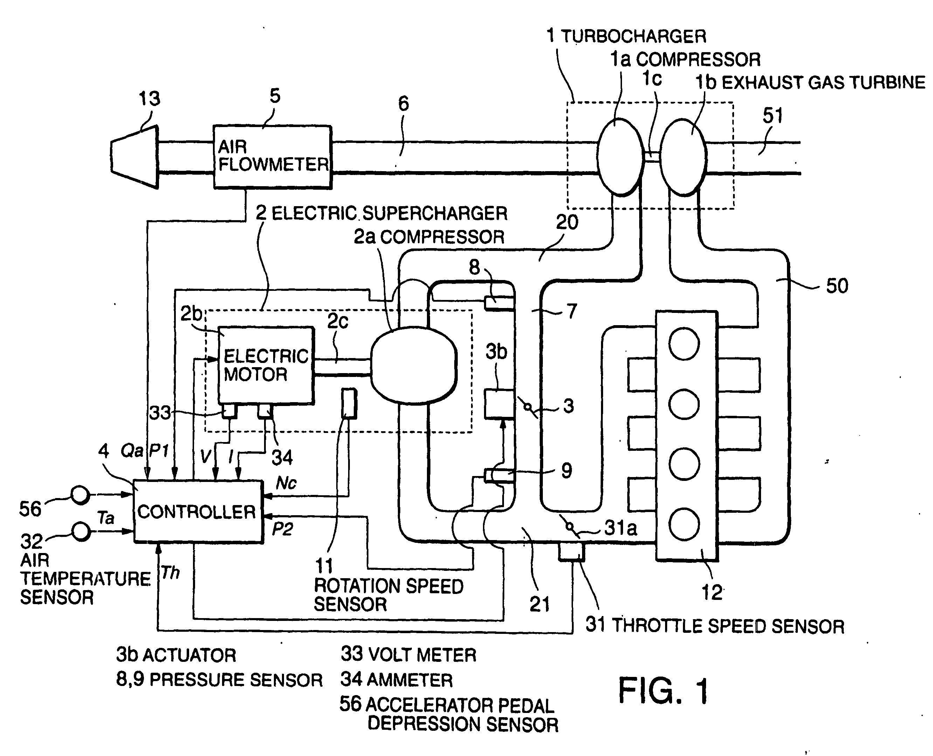

Referring to FIG. 1 of the drawings, an internal combustion engine 12 for a vehicle internally burns a mixture of fuel and air aspirated from intake passages 6, 20, 21, and rotates due to the combustion energy.

The exhaust gas produced by combustion is discharged from exhaust passages 50, 51.

The intake passages 6 and 20 are connected via a compressor 1a of a turbocharger 1.

The exhaust passages 50 and 51 are connected via an exhaust gas turbine 1b of the turbocharger 1.

The compressor 1a corresponds to a first compressor as defined in the claims.

The exhaust gas turbine 1b rotates due to the energy of the exhaust gas which flows from the exhaust passage 50, and rotates together with the compressor 1a connected via a shaft 1c. The exhaust gas which rotated the exhaust gas turbine 1b flows into the exhaust passage 51. The rotating compressor 1a aspirates and pressurizes air from the intake passage 6, and discharges it to the intake passage 20.

An air cleaner 13 is provided in the intake passage 6. Intake passages 20, 21 are connected via a compressor 2a of the electric supercharger 2, and by a bypass passage 7 which bypasses the compressor 2a. The compressor 2a corresponds to a second compressor as defined in the claims.

The electric supercharger 2 is provided with an electric motor 2b which drives the compressor 2a according to a signal from a controller 4, and a shaft 2c which transmits the rotation of the electric motor 2b to the compressor 2a. The compressor 2a aspirates and pressurizes the air in the intake passage 20 by rotation of the electric motor 2b, and discharges it to the intake passage 21. A throttle 31a is provided in the intake passage 21. The throttle 31a is interlocked with the depression amount of an accelerator pedal with which the vehicle is provided, and changes the intake cross-sectional area of the intake passage 21.

A bypass valve 3 is provided in the bypass passage 7. The bypass valve 3 is driven by an actuator 3b, and opens and closes the bypass passage 7 according to a signal from the controller 4. The controller 4 comprises a microcomputer provided with a central processing unit (CPU), read-only memory (ROM), random access memory (RAM) and I/O interface (I/O interface). It is also possible to form the controller from plural microcomputers.

To control the electric supercharger 2 and bypass valve 3 by the controller 4, an air flowmeter 5 which detects an air flowrate $Qa$ of the intake passage 6, pressure sensor 8 which detects a pressure $P1$ of the intake passage 20, pressure sensor 9 which detects a pressure $P2$ of the intake passage 21, rotation speed sensor 11 which detects a rotation speed $Nc$ of the compressor 2a, throttle speed sensor 31 which detects an operating speed $Th$ of the throttle 31a and air temperature sensor 32 which detects a temperature $Ta$ of the air pressurized by the compressor 2a, are provided. The detection data from each of these sensors is inputted into the controller 4 via a signal circuit shown by the thin line arrow of the drawing. The pressure $P1$ corresponds to a first pressure as defined in the claims, and a pressure $P2$ corresponds to the second pressure as defined in the claims, respectively.

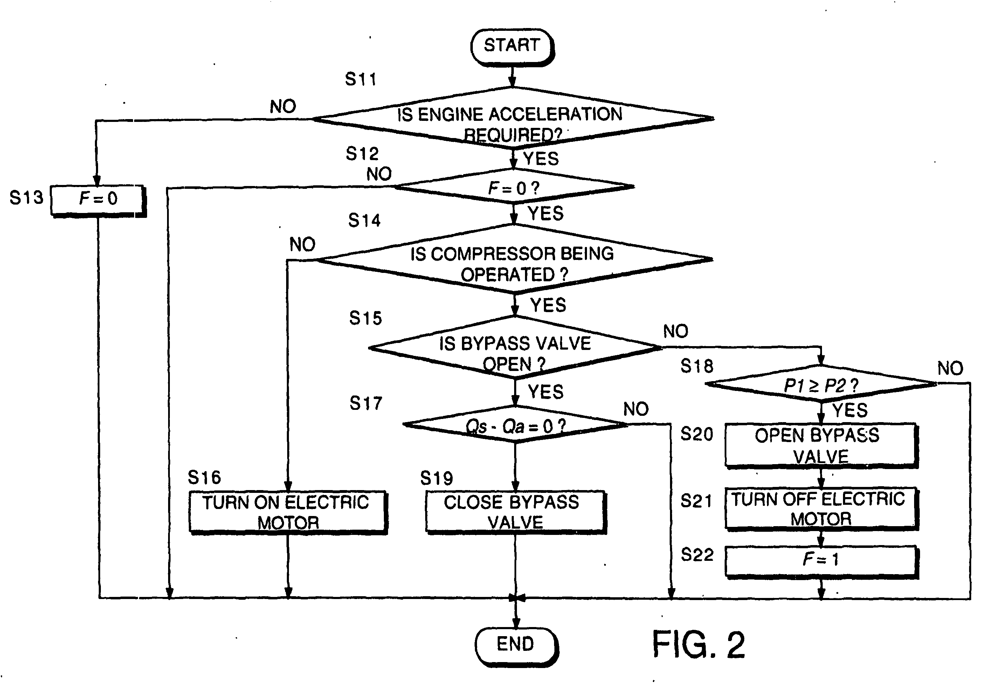

Next, referring to FIG. 2, the initial supercharging control routine performed by the controller 4 will be described. This routine is performed at an interval of ten milliseconds during operation of the engine 12. Initial supercharging control specifically means control from starting to stopping of the compressor 2a of the electric supercharger 2.

Supercharging is performed by the turbocharger 2 during acceleration of the engine 12. This routine aims for supercharging control of the turbo lag period until the boost pressure of the turbocharger 2 reaches the effective pressure from the acceleration requirement.

First, in a step S11, the controller 4 determines whether or not acceleration of the engine 12 is required from a throttle operation speed $Th$ inputted from the throttle speed sensor 31. Specifically, it is determined whether or not the throttle operation speed *Th* exceeds a predetermined value. Herein, the throttle operation speed *Th* assumes the speed in the opening direction is a positive value, and assumes the predetermined value is a positive value. A typical value of the predetermined value is 30 degrees per 100 milliseconds. The throttle speed sensor 31 corresponds to a parameter detection sensor relating to the acceleration requirement of the engine 12.

When acceleration is not required in the step S11, after resetting a state flag *F* to zero in a step S13, the controller 4 terminates the routine. The state flag *F* is a flag showing whether or not the initial supercharging processing has completed regarding the acceleration requirement of the engine 12, and as long as there is no acceleration requirement, it is always maintained at zero. Moreover, it is set to unity when this processing is completed as described hereafter.

When acceleration is required in the step S11, the controller 4 determines whether or not the state flag *F* is zero in a step S12. When the state flag *F* is not zero, the routine is terminated without proceeding to further steps. When the state flag *F* is zero in the step S12, it means that there is an acceleration requirement and the above processing is not complete. In that case, the controller 4, in a step S14, determines whether the compressor 2a is being operated.

When the compressor 2a is not being operated, the controller 4, in a step S16, after energizing the electric motor 2b and starting operation of the compressor 2a, terminates the routine.

When operation of the compressor 2a is already being performed, the controller 4, in a step S15, determines whether or not the bypass valve 3 is open.

When the bypass valve 3 is open, the controller 4 determines in a step S17 whether or not a flow *Qs* of air discharged by the compressor 2a of the electric supercharger 2 has reached an air flowrate *Qa* detected by the air flowmeter 5.

Herein, the air flowrate *Qs* discharged by the compressor 2a, is calculated by the following equation (1) using the rotation speed *Nc* of the compressor 2a detected by the rotation speed sensor 11, the pressure *P1* of the intake passage 20 detected by the pressure sensor 8, and the air temperature *Ta* of the intake passage 20 detected by the temperature sensor 32.

$$Qs = COEF \cdot \frac{Nc \cdot P1}{Ta} \qquad (1)$$

where, *COEF* = conversion factor.

The air flowrate *Qs* calculated by equation (1) and the air flowrate *Qa* detected by the air flowmeter 5 are both mass flowrates.

All the intake air of the engine 12 passes the air flow meter 5. Therefore, when the air flowrate *Qs* discharged by the compressor 2a reaches the air flowrate *Qa* of the air flowmeter 5, it means that all of the intake air passes via the compressor 2a, and the flowrate of the bypass valve 3 is substantially zero. Alternatively, it means that the compressor 2a has reached the rotation speed which is sufficient to satisfy the supercharging required by the engine 12.

If the determination of the step S17 is affirmative, the controller 4 closes the bypass valve 3 in a step S19 and terminates the routine. If the determination of the step S17 is negative, the controller 4 terminates the routine immediately without proceeding to the step S19.

On the other hand, in the step S15, when the bypass valve 3 is not open, the controller 4, in a step S18, determines whether or not the pressure *P1* of the intake passage 20 is more than the pressure *P2* of the intake passage 21. When the pressure *P1* of the intake passage 21 is less than the pressure *P2* of the intake passage 20, the controller 4 terminates the routine immediately.

If the pressure *P1* of the intake passage 21 is more than the pressure *P2* of the intake passage 20, in a step S20, the controller 4 opens the bypass valve 3, and in a step S21, stops operation of the compressor 2a, sets the state flag *F* to unity in the step S21, and terminates the routine.

According to this routine, when acceleration of the engine 12 is required, as soon as the bypass valve 3 has opened, the compressor 2a starts. After this, a change of intake air amount of the engine 12 accompanying closure of the bypass valve 3 can be prevented by keeping the bypass valve 3 open until the flowrate of the bypass valve 3 effectively becomes zero in the step S17, or until the compressor 2a reaches the rotation speed required for supercharging.

After closing the bypass valve 3 in the step S19, the controller 4 continues operation of the compressor 2a until the pressure *P1* of the intake passage 20 reaches the pressure *P2* of the intake passage 21. If the pressure *P1* of the intake passage 20 becomes more than the pressure *P2* in the intake passage 21, it means that the boost pressure of the turbocharger 1 has risen and that supercharging can be performed only by the turbocharger 1.

If this condition is satisfied in the step S18, the controller 4 opens the bypass valve 3, and stops operation of the compressor 2a. Also, the state flag *F* is set to unity which shows completion of initial supercharging processing. The reason why the bypass valve 3 is closed until the pressure *P1* of the intake passage 20 becomes more than the pressure *P2* of the intake passage 21 in the step S18, is to prevent air flowing backwards from the intake passage 21 to the intake passage 20 via the bypass valve 3.

If the air in the intake passage 21 flows backwards to the intake passage 20, the intake air amount of the engine 12 will decrease and the air-fuel ratio of the fuel-air mixture burnt by the engine 12 or the output torque of the engine 12 will vary. After the pressure *P1* of the intake passage 20 reaches the pressure *P2* of the intake passage 21, if the bypass valve 3 is opened, the change-over to the turbocharger 1 from the electric supercharger 2 can be performed smoothly without the air supplied to the engine 12 flowing backwards to the intake passage 20, and affecting exhaust gas composition and output torque.

During subsequent acceleration operation of the engine 12, as the determination result of the step S12 becomes negative, essentially none of the processing of this routine is performed, and operation of the engine 12 is performed under supercharging by the turbocharger 1. When acceleration is no longer required, the state flag *F* is reset to zero in a step S13, and the routine continues resetting the state flag *F* to zero henceforth at every execution of the routine until an acceleration requirement is detected.

According to this routine, determination of the acceleration requirement of the engine 12 in the step S11 is performed based on the throttle operation speed *Th,* but it may also be determined based on the throttle opening or accelerator pedal depression amount. For example, the accelerator pedal depression amount is detected by an accelerator pedal depression sensor 56. The depression amount is compared with the predetermined amount and when the depression amount is larger than the predetermined amount at a given engine rotation speed in the step S11, the controller 4 determines that the acceleration of the engine 12 is required. The predetermined amount depends on the engine rotation speed and is set to, for example, 15 degrees at 1200 revolutions per minute (rpm), 20 degrees at 2000 rpm, and 40 degrees at 3000 rpm.

Also according to this routine, the discharge air flowrate *Qs* of the compressor 2a is calculated by the equation (1) in the step S17, but the air flowrate *Qs* may also be calculated by another method not based on the equation (1).

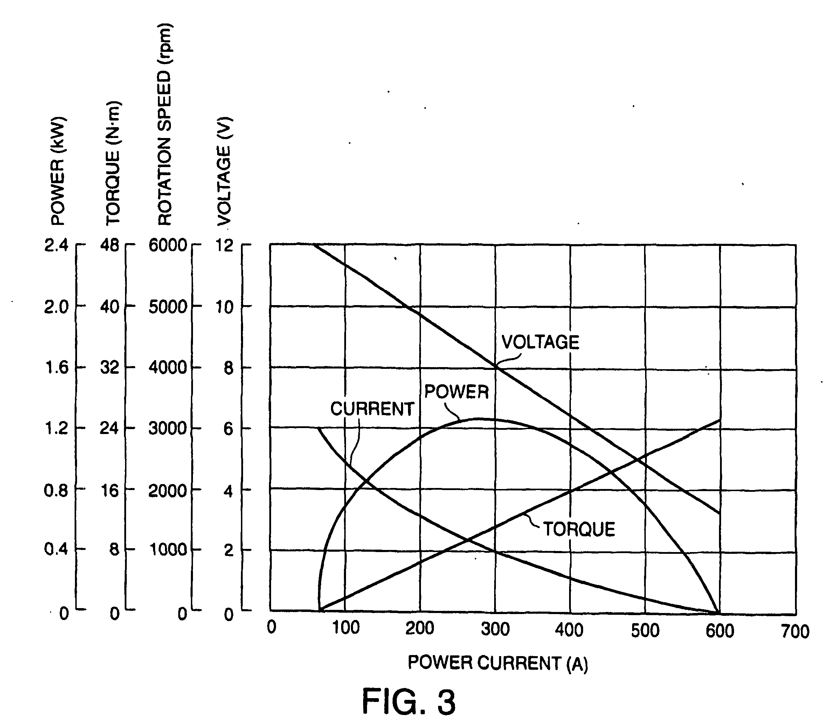

That is, the voltage and current supplied to the electric motor 2b are detected using a voltmeter 33 and an ammeter 34, and the rotation speed of the electric motor 2b is calculated from the voltage and current by looking up a map of the characteristics of the electric motor 2b shown in FIG. 3 which is prestored in the memory (ROM) of the controller 4.

FIG. 3 shows the relation between the generated torque, rotation speed and generated power of the electric motor 2b to the current and voltage supplied to the electric motor 2b. As shown in this diagram, when the current becomes large, the generated torque increases but the voltage and rotation speed decrease. The generated power increases with the current to the vicinity of 300 amperes [A], reaches a maximum near 300 amperes [A], and if the current increases more than this, it starts to decrease.

The controller 4 calculates the rotation speed *Nc* of the compressor 2a from the calculated rotation speed of the electric motor 2b. In this embodiment, as the electric motor 2b and compressor 2a are directly connected by the shaft 2c, the rotation speed *Nc* of the compressor 2a is equal to the rotation speed of the electric motor 2b. The controller 4 further calculates the discharge air flowrate *Qs* of the compressor 2a by the following equation (2) from a discharge flow amount *qu* per rotation of the compressor 2a which is found beforehand from the specification of the compressor 2a, and the rotation speed *Nc* of the compressor 2a.

$$Qs = qu \cdot Nc \tag{2}$$

Thus, when calculating the discharge air flowrate *Qs* of the compressor from the current and voltage supplied to the electric motor 2a, the rotation speed sensor 11 and the air temperature sensor 32 can be omitted.

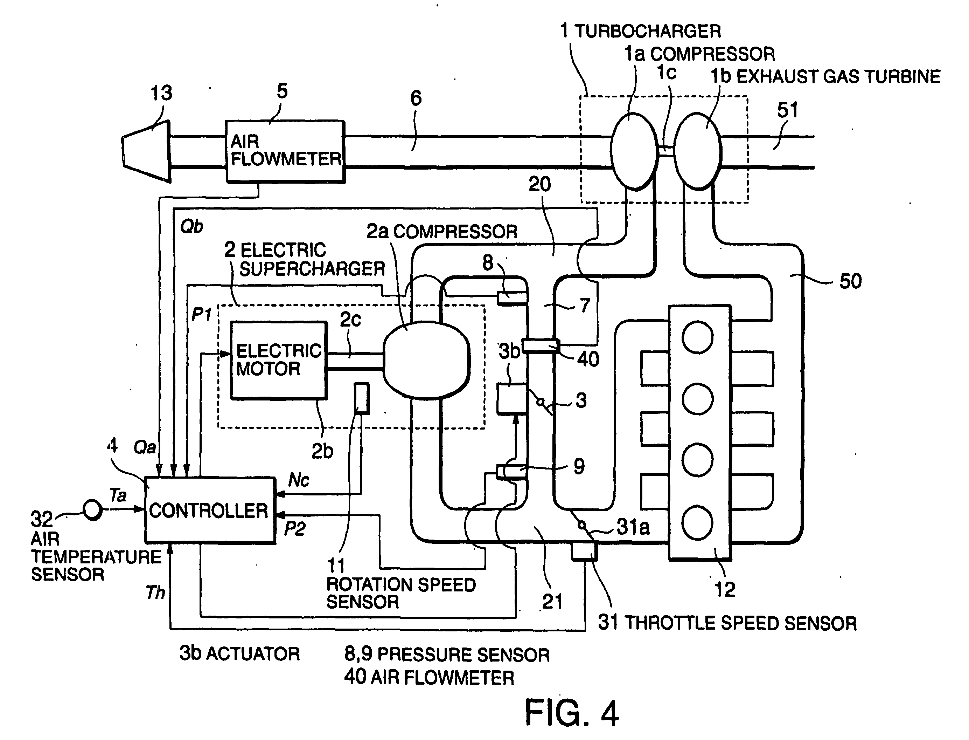

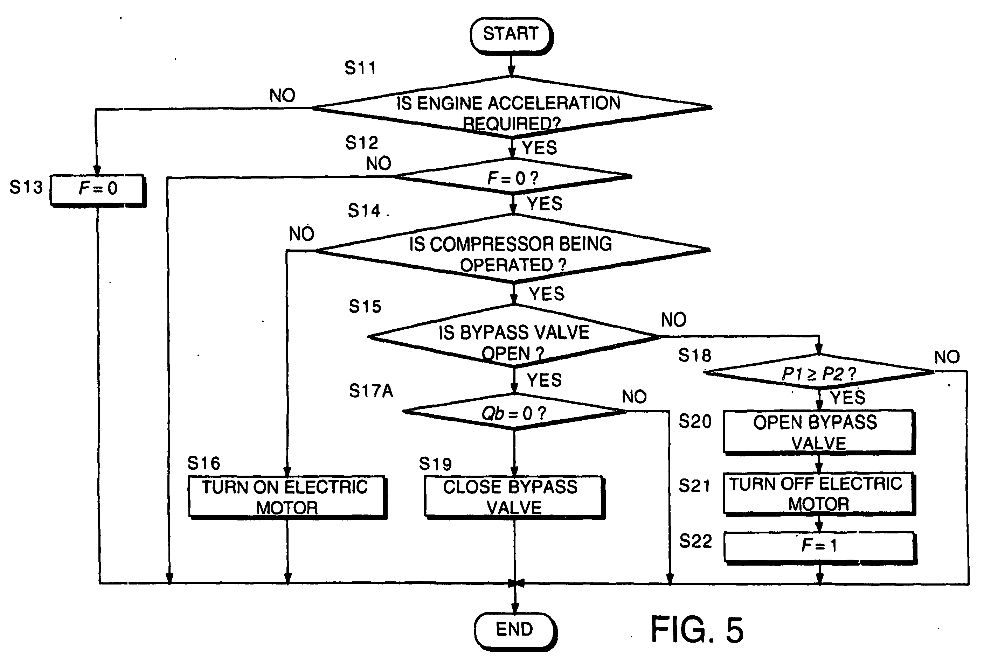

Next, referring to FIGs. 4 and 5, a second embodiment of this invention will be described.

First, referring to FIG. 4, in this embodiment, a second air flowmeter 40 which detects a bypass flowrate *Qb* is installed upstream of the bypass valve 3 of the bypass passage 7.

Also, the air temperature sensor 32 and the rotation speed sensor 11 of the compressor 2a provided in the first embodiment are omitted in this embodiment. The other features of the hardware of the supercharging device are identical to those of the first embodiment.

In the first embodiment, when the flowrate *Qs* of the compressor 2a is calculated using equation (1) from the rotation speed *Nc* of the compressor 2a, the pressure *P1* of the intake passage 20 and the intake air temperature *Ta* in the step S17 of FIG. 2, and the flowrate *Qs* becomes equal to the intake air flowrate *Qa* detected by the air flowmeter 5, in a step S19, the bypass valve 3 is closed.

On the other hand, in this embodiment, the initial supercharging control routine shown in FIG. 5 is performed instead of the initial supercharging control routine of FIG. 2.

In the routine of FIG. 5, a step S17A is provided instead of the step S17 of FIG. 2.

In the step S17A, the controller 4 determines whether or not the bypass flowrate *Qb* is zero. When the bypass flowrate *Qb* is zero, in a step S19, the controller 4 closes the bypass valve 3. When the bypass flowrate *Qb* is not zero, the processing of steps S18-S22 is performed. The processing other than that of the step S17A is identical to that of the routine of FIG. 2.

According to this embodiment, the bypass valve 3 is closed after the bypass flowrate *Qb* becomes zero after starting the compressor 2a, so even if the bypass valve 3 is closed, the intake air amount of the engine 12 does not change, and reduction of the intake air amount of the engine 12 accompanying closure of the bypass valve 3 can be prevented as in the first embodiment

The effects of the above embodiments are as follows.

(1) In the state where exhaust gas pressure is low as in the low rotation speed region of the engine 12 and the turbocharger 1 cannot perform supercharging sufficiently, the lack of supercharging performance of the turbocharger 1 can be compensated by the electric supercharger 2. As the bypass valve 3 is opened after the turbocharger 1 is in the state where supercharging can be sufficiently performed, the air which subsequently moves from the intake passage 20 to the intake passage 21 passes not via the compressor 2a in the stop state but along the bypass passage 7 which has less resistance. Therefore, the compressor 2a does not lead to a pressure loss of supercharging by the turbocharger 1.

(2) The bypass valve 3 is always opened when the compressor 2a starts, and air moves from the intake passage 20 to the intake passage 21 via both the compressor 2a and the bypass passage 7. Therefore, even if the compressor 2a is in the state where the rotation speed is low immediately after starting, it does not present a resistance to aspiration by the engine 12. As a result, there is no temporary reduction of the intake air amount of the engine 12 accompanying the starting of the compressor 2a.

(3) As the bypass valve 3 is closed when the flowrate of the bypass valve 3 is effectively zero, the closure of the bypass valve 3 does not cause a change in the intake air amount of the engine 12.

(4) As the bypass valve 3 is opened when the pressure $P1$ of the intake passage 20 and the pressure $P2$ of the intake passage 21 become equal, even if the bypass valve 3 is opened, air does not flow backwards in the bypass passage 7. In other words, the opening of the bypass valve 3 does not cause a change of the intake air amount of the engine 12.

Hence, as the effect of opening and closing of the bypass valve 3 in the early stages of supercharging on the intake air amount of the engine 12 is eliminated, after supercharging starts, the intake air amount of the engine 12 increases smoothly and with a good response, and a satisfactory accelerating performance is obtained. Also, as the intake air amount of the engine 12 does not change suddenly, a change of the air-fuel ratio of the fuel-air mixture which is burnt and a change of output torque can also be prevented.

In all the above embodiments, the closure of the bypass valve 3 was delayed until the flowrate of the bypass valve 3 became zero after starting the compressor 2a, but a similar effect can be obtained by delaying closure of the bypass valve 3 to a certain time after starting operation of the compressor 2a, e.g., opening the bypass valve 3 at a predetermined time from the starting of the compressor 2a, or opening the bypass valve 3 when the rotation speed $Nc$ of the compressor 2a reaches a predetermined speed.

Although the above embodiments relate to a supercharging device provided with the compressor 1a upstream of the compressor 1a, this invention can be applied also to a supercharging device comprising only the compressor 2a and bypass valve 3 as in the above prior art example JP2000-230427A. Moreover, it is not limited to cases where the drive force of the compressor 2a is the electric motor 2b, and can be applied to various rotary drive devices including an exhaust gas turbine.

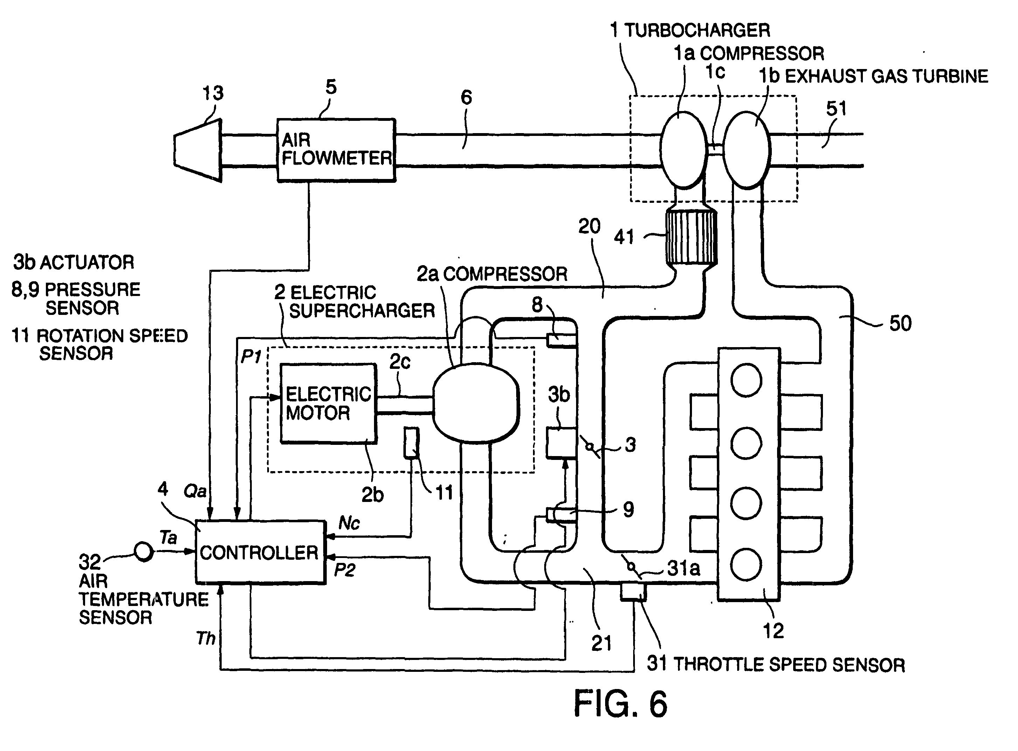

Next, referring to FIG. 6, a third embodiment of this invention will be described.

The supercharging device according to this embodiment is provided with an intercooler 45 between a branch point with the bypass passage 7 of the intake passage 20, and the compressor 1a of the turbocharger 1. The remaining features of the construction are identical to those of the supercharging device according to the first or second embodiments. Due to the intercooler 45, air compressed by the compressor 1a which is at a high temperature, is cooled. As a result, as the heat amount transmitted to the electric motor 2b via the shaft 2c from the compressor 2a becomes small, the operating efficiency of the electric motor 2b improves, and the acceleration performance of the supercharging device improves. Also, as the temperature rise of the electric motor 2b is controlled, if the boost pressure of the turbocharger 1 does not rise for example when climbing a mountain road, supercharging by the compressor 2a can be performed over a long period.

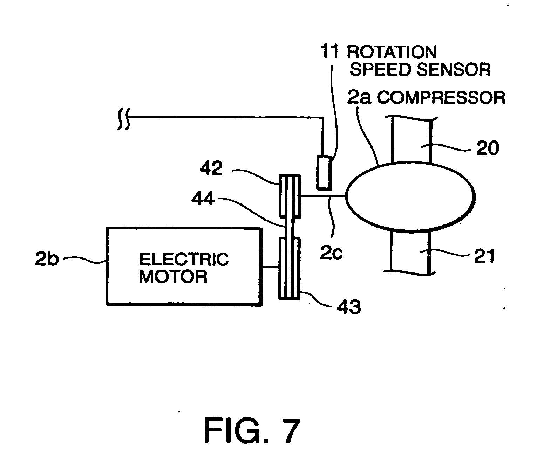

Next, referring to FIG. 7, a fourth embodiment of this invention will be described.

The electric supercharger 2 according to this embodiment connects the compressor 2a and electric motor 2b via pulleys 42, 43 and a belt 44 instead of directly connecting via the shaft 2c. The pulley 42 is connected to the compressor 2a, and the pulley 43 is connected to the electric motor 2b, respectively, and the belt 44 is looped around the pulleys 42 and 43. The remaining features of the construction are identical to those of the third embodiment.

Due to this construction, the amount of heat transfer from the compressor 2a to the electric motor 2b can be further reduced. Also, by setting the outer diameter of the pulley 43 to be larger than the outer diameter of the pulley 42, the rotation of the electric motor 2b can be accelerated and transmitted to the compressor 2a, and the boost pressure of the compressor 2a can be increased.

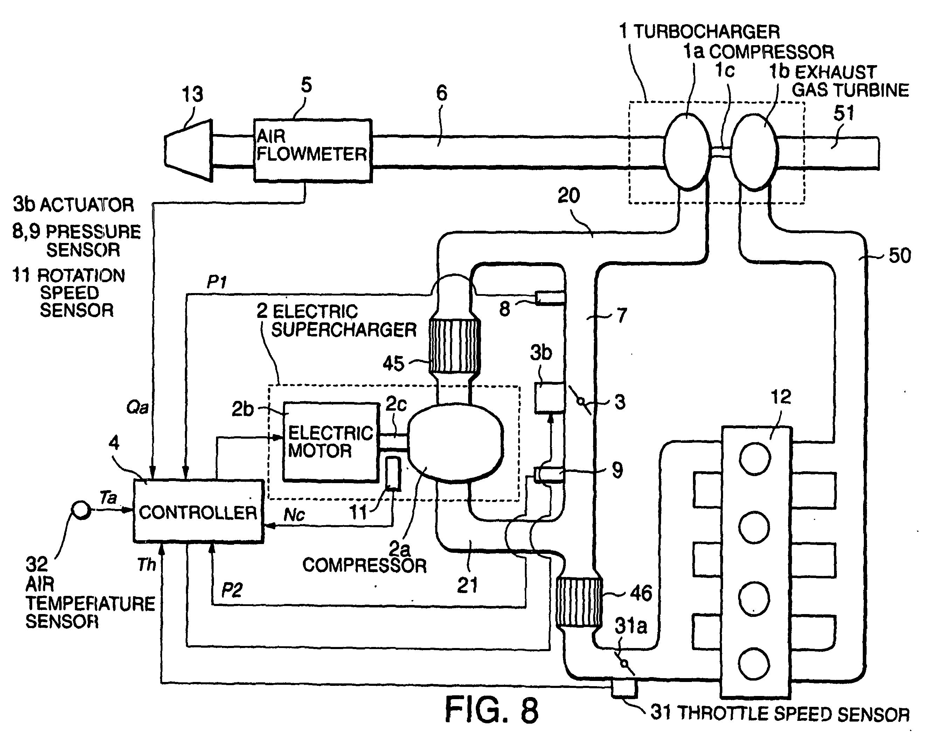

Next, referring to FIG. 8, a fifth embodiment of this invention will be described.

In this embodiment, a first intercooler 45 is provided between the branch point with the bypass passage 7 of the intake passage 20, and the compressor 2a, and a second intercooler 46 is provided between the branch point of the bypass passage 7 of the intake passage 21, and the engine 12. The remaining hardware is identical to that of the first embodiment.

In this embodiment, the air aspirated by the compressor 2b is cooled by the first intercooler 45 as in the third embodiment. As a result, as the heat amount transmitted to the electric motor 2b via the shaft 2c from the compressor 2a becomes small, the operating efficiency of the electric motor 2b improves, and the acceleration performance of the supercharging device improves. Also, as the temperature rise of the electric motor 2b is controlled, if the boost pressure of the turbocharger 1 does not rise for example when climbing a mountain road, supercharging can be performed by the compressor 2a over a long time period. Also, as the second intercooler 46 cools both the air discharged from the compressor 2a and the air from the bypass passage 7, and supplies the engine 12, the intake air temperature of the engine 12 is always maintained within a desirable range.

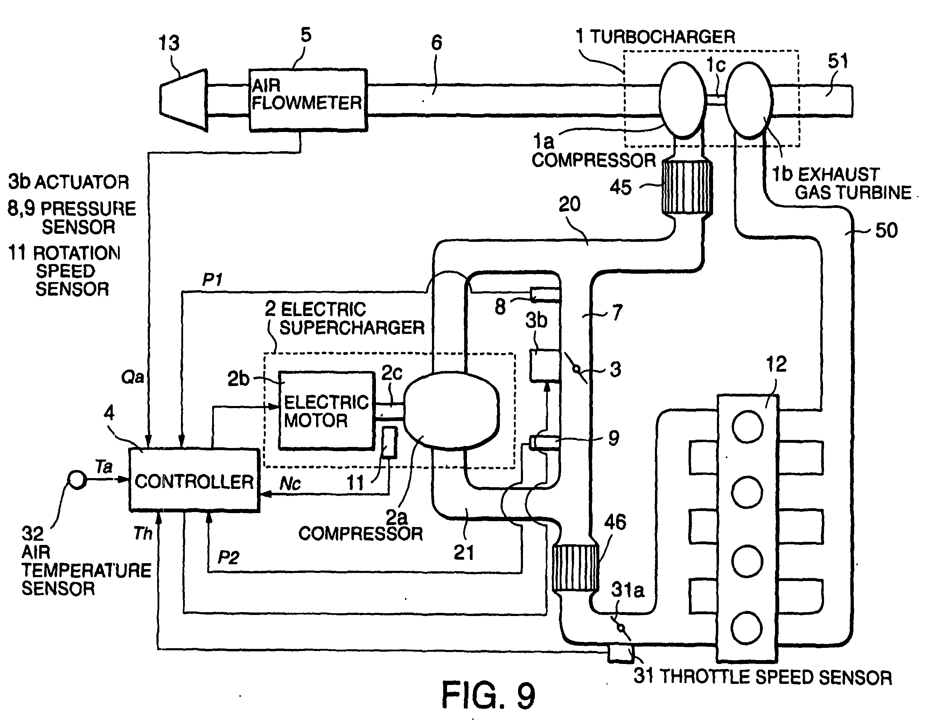

Next, a sixth embodiment of this invention will be described referring to FIG. 9.

In this embodiment, the first intercooler 45 is disposed between the branch point of the bypass passage 7 of the intake passage, and the compressor 1a of the turbocharger 1. The remaining features of the composition are identical to those of the fifth embodiment.

According to this embodiment, the air discharged from the compressor 1a passes through the two intercoolers 45 and 46 irrespective of the operation of the compressor 2a.

In the high load operating region of the engine 12, when the boost pressure due to the compressor 1a is increased, the compressor 2a stops operation and all air is supplied to the engine 12 from the bypass passage 7. According to this embodiment, cooling of intake air is performed also in this state by the two intercoolers 45 and 46, so cooling efficiency is higher than in the fifth embodiment, and it is possible to make the capacity of the intercooler 46 small.

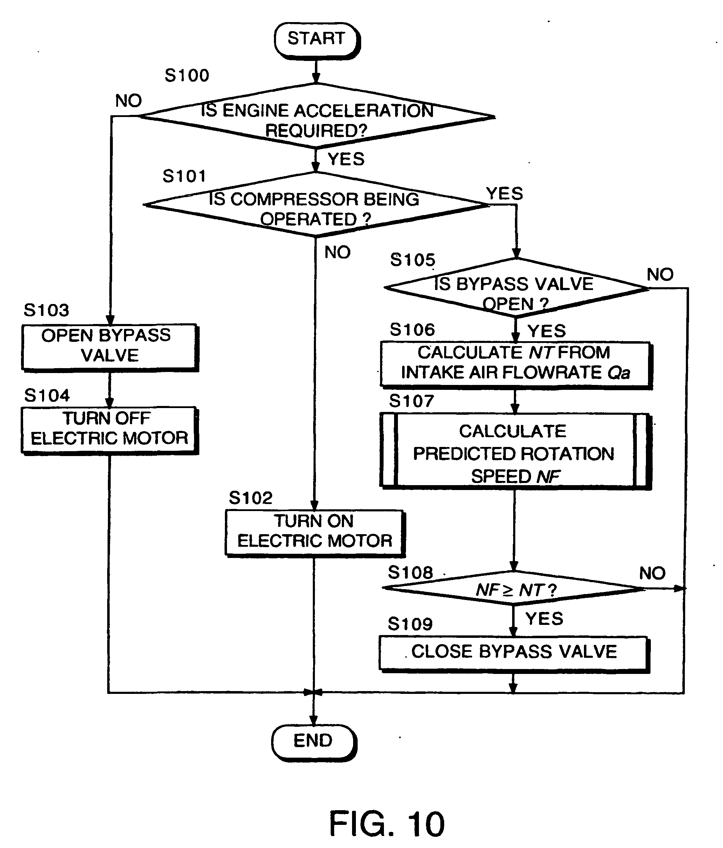

Next, referring to FIGs. 10-12, FIGs. 13A-13E and FIGs 14-16, a seventh embodiment of this invention will be described.

In each of above mentioned embodiments, as shown for example in the Steps S17, S19 of the first embodiment, the bypass valve 3 is closed when the flowrate of the bypass valve 3 is effectively zero. In this case, a closure signal is outputted to the actuator 3b from the controller 4, and it takes some time for the bypass valve 3 to rotate from a fully open position to a fully closed position. This required time introduced a delay into the control of the bypass valve 3. Consequently, as the rotation speed of the electric motor 2b rises during this delay, part of the air discharged from the compressor 2a flows backwards to the intake passage 20 via the bypass valve 3 before it has been closed. As a result, when the bypass valve 3 has completely closed, the intake air volume of the engine 12 rapidly increases, and a stepwise difference may appear in the output torque.

The main feature of this embodiment is that the rotation speed variation of the electric motor 2b is predicted, and a closure signal is output to the actuator 3b based on the predicted rotation speed so that a stepwise difference does not arise in the output torque of the engine 12 due to closure of the bypass valve 3.

The construction of the hardware of this embodiment is identical to that of the first embodiment, but the controller 4 performs the initial supercharging processing routine shown in FIG. 10 instead of the initial supercharging processing routine of FIG. 2.

This routine is also performed at an interval of ten milliseconds during operation of the engine 12.

Referring to FIG. 10, first in a step S100, the controller 4 determines whether or not acceleration of the engine 12 is required.

This determination is identical to the determination of the step S11 of FIG. 2.

As operation of the compressor 2a is unnecessary when acceleration of the engine 12 is not required, the controller 4 opens the bypass valve 3 in a step S103, stops operation of the compressor 2a in a step S104, and terminates the routine.

The processing of the Steps S103 and S104 is equivalent to the processing of the Steps S20 and S21 of FIG. 2.

When acceleration of the engine 12 is required in the step S100, the controller 4 determines whether or not the compressor 2a is being operated in a step S101.

This determination is identical to the determination of the step S14 of FIG. 2.

When the compressor 2a is not being operated, in a step S102, the controller 4 energizes the electric motor 2b to start the compressor 2a, and terminates the routine.

This processing is identical to the processing of the step S16 of FIG. 2.

If the compressor 2a is already operating, the controller 4 determines, in a step S105, whether or not the bypass valve 3 is open. This determination is identical to the determination of the step S15 of FIG. 2.

When the bypass valve 3 is open, in a step S106, a target rotation speed $NT$ of the compressor 2a is calculated from the air flowrate $Qa$ detected by the air flowmeter 5.

Herein, it is preferable that the bypass valve 3 completes the closing operation at the timing where all the intake air of the engine 12 has been supplied from the compressor 2a, or the intake air flowrate $Qa$ has become equal to the discharge flowrate $Qs$ of the compressor 2a. The relation of the rotation speed $Nc$ of the compressor 2a and the discharge flowrate $Qs$ may be roughly expressed by the following equation (3):

$$Qs = COEFA \cdot Nc \qquad (3)$$

where, $COEFA$ = conversion factor.

Herein, the rotation speed $Nc$ of the compressor 2a when the discharge flowrate $Qs$ of the compressor 2a is equal to the intake air volume $Qa$ of the engine 12, is the target rotation speed *NT*.

If the above delay in the closure of the bypass valve 3 is represented by a delay time *T* and a closure signal is outputted to the actuator 3b of the bypass valve 3 at a time obtained by deducting the delay time *T* from the time when the rotation speed of the compressor 2a reaches the target rotation speed *NT*, closure of the bypass valve 3 will be completed when the intake air flowrate *Qa* becomes equal to the discharge flowrate *Qs*.

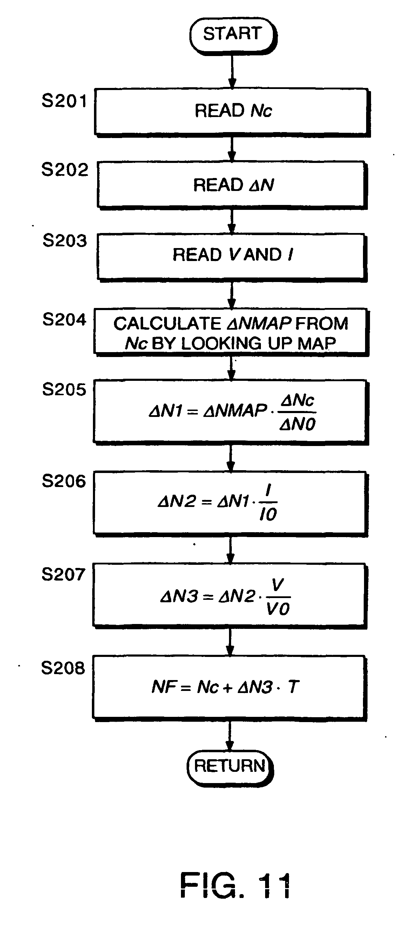

After calculating the target rotation speed *NT* in the step S106, the controller 4, in a step S107, calculates the predicted rotation speed *NF* of the compressor 2a after the delay time *T* has elapsed from the present time by performing the subroutine shown in FIG. 11.

Referring to FIG. 11, in a step S201, the controller 4 reads the rotation speed *Nc* of the compressor 2a detected by the rotation speed sensor 11.

In a following step S202, the controller 4 calculates the difference of the rotation speed *Nc* of the compressor 2a, and a rotation speed $Nc_{n-1}$ of the compressor 2a read on the immediately preceding occasion when the subroutine was executed as an increase rate *ΔNc* of the rotation speed of the compressor 2a.

In a following step S203, the controller 4 reads a detection voltage *V* of a voltmeter 33, and a detection current *I* of an ammeter 34.

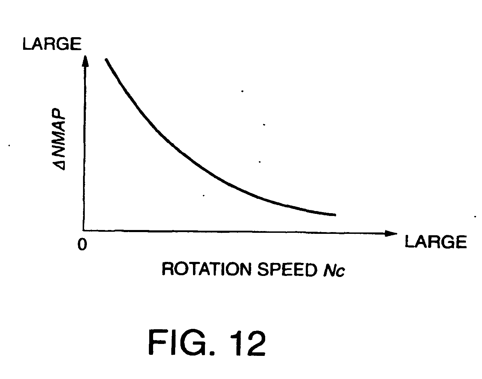

In a following step S204, the controller 4 calculates a rotation increase rate prediction value *ΔNMAP* during the delay time *T* from the rotation speed *Nc* of the compressor 2a by looking up a map having the characteristics shown in FIG.12 which is prestored in a memory (ROM).

In this map, the rotation increase rate prediction value *ΔNMAP* becomes smaller as the rotation speed *Nc* of the compressor 2a increases, as shown in FIG. 12. As the output torque of the electric motor 2b which drives the compressor 2a falls according to the rise of rotation speed, the rotation increase rate per unit time becomes smaller with increasing rotation speed, as shown in FIG. 3.

This is why, in FIG. 12. the rotation increase rate prediction value *ΔNMAP* becomes smaller as the rotation speed *Nc* increases.

In a following step S205, the controller 4 corrects the rotation increase rate prediction value *ΔNMAP* by the following equation (4) using a real rotation increase rate *ΔNc*. This correction corrects for the change of the rotation increase rate of the electric motor 2b due to the effect of the load fluctuation of the electric motor 2b, or the time-dependent variation in the performance of the electric motor 2b.

The rotation increase rate prediction value after compensation is taken as *ΔN1*.

$$\Delta N1 = \Delta NMAP \cdot \frac{\Delta Nc}{\Delta N0} \qquad (4)$$

where, *ΔN0* = reference rotation increase rate.

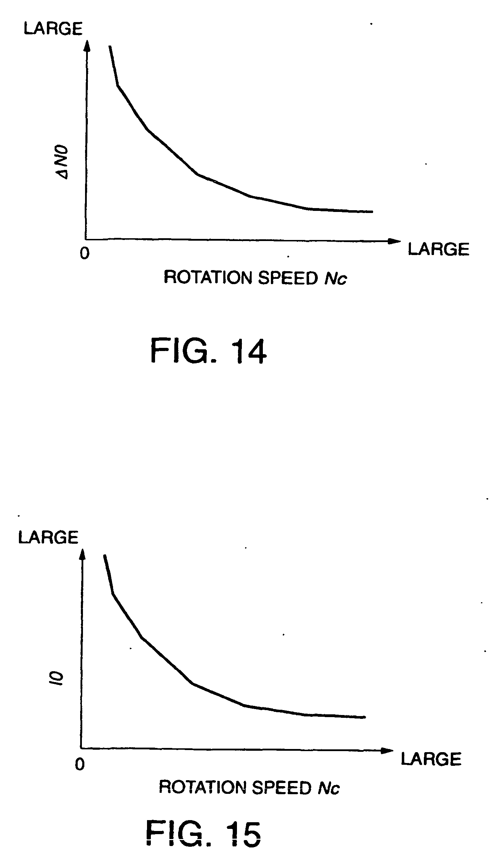

The controller 4 performs the calculation of equation (4) after calculating the reference rotation increase rate *ΔN0* from the rotation speed *Nc* of the compressor 2a by looking up a map having the characteristics shown in FIG. 14 which is prestored in an internal memory (ROM). This map is set so that the reference rotation increase rate *ΔN0* decreases as the rotation speed *Nc* increases.

In a following step S206, the controller 4 further corrects the rotation increase rate prediction value *ΔN1* by the following equation (5) based on the current *I* supplied to the electric motor 2b.

This correction corrects for the variation of the rotation increase rate of the electric motor 2b according to the current *I*. The rotation increase rate prediction value after compensation is taken as *ΔN2*.

$$\Delta N2 = \Delta N1 \cdot \frac{I}{I0} \qquad (5)$$

where, *I0* = reference current value.

The controller 4 performs the calculation of equation (5) after calculating the reference current value *I0* from the rotation speed *Nc* of the compressor 2a by looking up a map having the characteristics shown in FIG. 15 stored beforehand in the internal- memory (ROM). This map is set so that the reference current value *I0* decreases as the rotation speed *Nc* increases.

In a following step S207, the controller 4 also corrects the rotation increase rate prediction value *ΔN2* by the following equation (6) based on the voltage *V* supplied to the electric motor 2b. This corrects the variation of the rotation increase rate prediction value of the electric motor 2b according to the voltage *V*.

The rotation increase rate prediction value after correction is set to *ΔN3*.

$$\Delta N3 = \Delta N2 \cdot \frac{V}{V0} \qquad (6)$$

where, *V0* = reference voltage value.

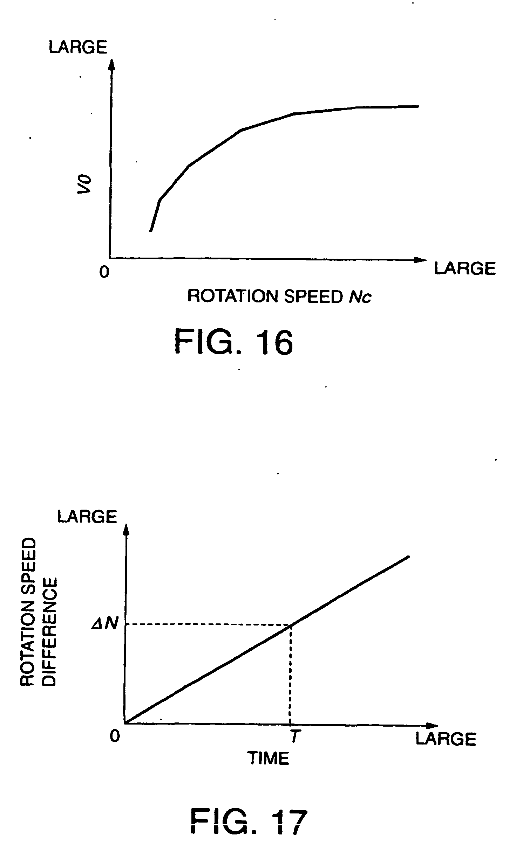

The controller 4 performs the calculation of equation (6) after calculating the reference voltage value *V0* from the rotation speed *Nc* of the compressor 2a by looking up a map having the characteristics shown in FIG. 16 stored beforehand in the internal memory (ROM). This map is set so that the reference voltage value *V0* increases as the rotation speed *Nc* increases.

It is not absolutely necessary to, perform all the corrections of the steps S205-S207, and a setting which performs only one or two of the corrections of the steps S205-S207, or a setting which does not perform correction, are also possible.

In a following step S208, the predicted rotation speed *NF* after the delay time *T* passes is calculated by the following equation (7) using the rotation increase rate prediction value $\Delta N3$.

$$NF = Nc + \Delta N3 \cdot T \qquad (7)$$

After the processing of the step S208, the controller 4 terminates the subroutine.

Referring again to FIG.10, after calculating the-predicted rotation speed $NF$ in the step S107. the controller 4, in a step S108, determines whether or not the predicted rotation speed $NF$ has reached the target rotation speed $NT$. When the predicted rotation speed $NF$ has reached the target rotation speed $NT$, the controller 4 closes the bypass valve 3 in a step S109, and terminates the routine. When the predicted rotation speed $NF$ has not reached the target rotation speed $NT$, the controller 4 terminates the routine without performing the processing of the step S109.

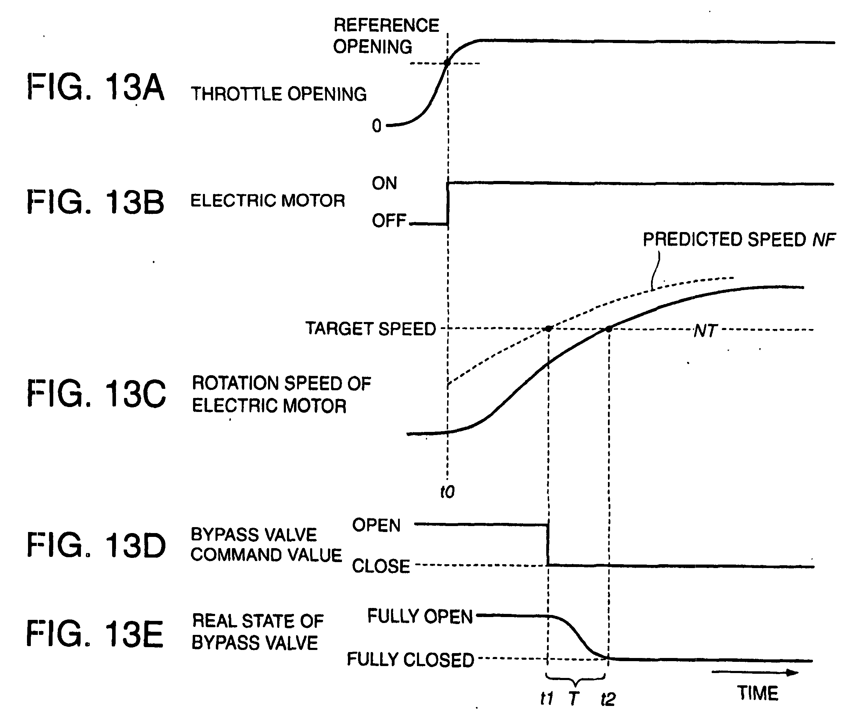

The change of the rotation speed $Nc$ of the compressor 2a and the change in the opening of the bypass valve 3 due to the execution of this routine will now be described referring to FIGs. 13A-13E.

First, as shown in FIG.13A, if an acceleration requirement is detected in the step S100 at a time $t0$, the controller 4, as shown in FIG. 13B, immediately switches on power to the electric motor 2b, and starts operation of the compressor 2a.

As a result, as shown in FIG. 13C, the rotation speed $Nc$ of the compressor 2a rises, and the predicted rotation speed $NF$ reaches the target rotation speed $NT$ at a time $t1$.

At this point, as shown in FIG.13D, the controller 4 outputs a closure signal to the actuator 3b of the bypass valve 3. As a result, the bypass valve 3 rotates in the closure direction, and at a time $t2$ when the delay time $T$ has elapsed since the time $t1$, the rotation speed $Nc$ of the compressor 2a reaches the target rotation speed $NT$, and closure of the bypass valve 3 is completed simultaneously.

Thus, since closure of the bypass valve 3 is completed in synchronism with the attainment of the target rotation speed $NT$ by the compressor 2a, the air discharged by the compressor 2a does not flow backwards from the bypass valve 3 to the intake passage 20. Therefore, closure of the bypass valve 3 does not lead to a change in the intake air flowrate of the engine 12, and the output torque of the engine 12 does not vary in stepwise fashion.

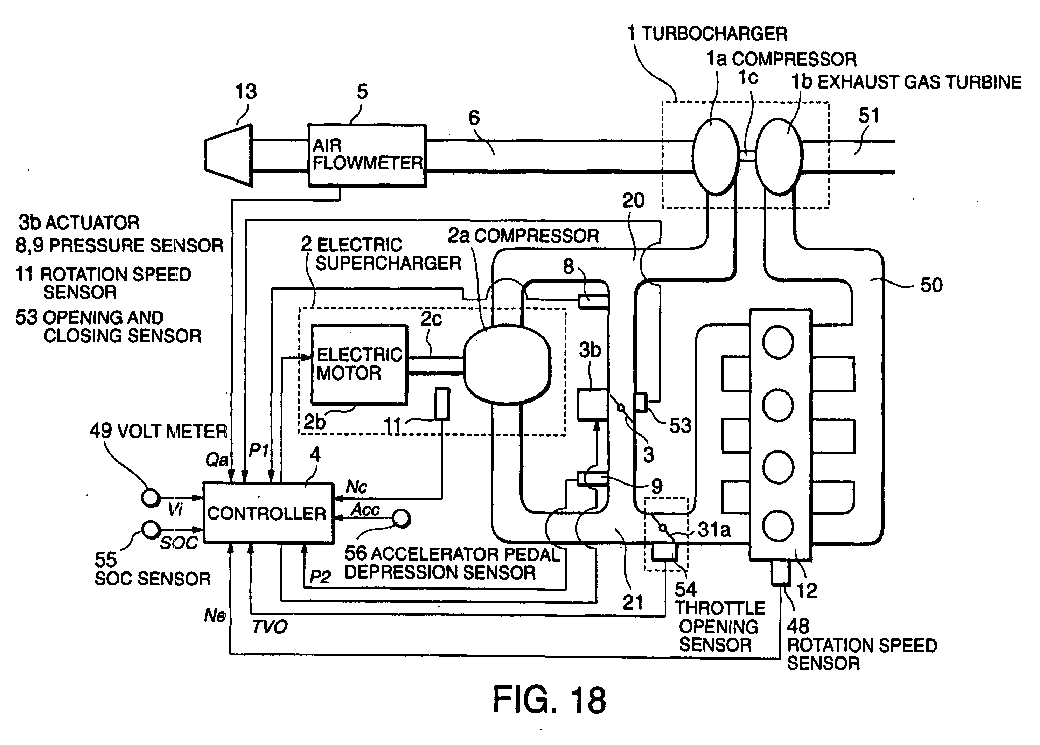

Next, referring to FIG. 17, an eighth embodiment of this invention will be described.

This embodiment is an embodiment relating to a method of calculating the predicted rotation speed $NF$ by the controller 4 in the step S107 of FIG. 8.

The construction of the hardware of the supercharging device is identical to that of the supercharging device according to the seventh embodiment.

In this embodiment, as shown in FIG.17, it is considered that the rotation speed increase rate of the compressor 2a is fixed. According to this diagram, the rotation speed difference $\Delta N$ can be calculated from the delay time $T$. The delay time $T$ can be found beforehand by experiment. Therefore, the rotation speed difference $\Delta N$ is given as a fixed value. The controller 4 according to this embodiment, in the step S107, calculates the predicted rotation speed $NF$ by adding the rotation speed difference $\Delta N$ to the initial value $N0$ of the rotation speed when the compressor 2a is started.

According to this embodiment, the same effect as that of the seventh embodiment can be obtained by means of a simple construction.

Next, referring to FIGs.18-21, a ninth embodiment of this invention will be described.

Referring to FIG.18, the supercharging device according to this embodiment is provided with an opening and closing sensor 53 which detects whether the bypass valve 3 is in the closed position, an engine rotation speed sensor 48 which detects the rotation speed $Ne$ of the engine 12, a voltmeter 49 which detects a power generation voltage $Vi$ of an alternator, a $SOC$ sensor 55 which detects a state of charge $SOC$ of a battery, and an accelerator pedal depression sensor 56 which detects a depression amount $Acc$ of an accelerator pedal with which the vehicle is provided. The voltmeter 49 detects the voltage $Vi$ as a value representing the generated power of the alternator.

The throttle speed sensor 31 is also replaced by a throttle opening sensor 54 which detects the opening $TVO$ of the throttle 31a. The alternator is an AC generator driven by the engine 12, while the battery stores the generated power of the alternator, and supplies the power to the electric motor 2b. The detection data of these sensors are inputted to the controller 4 as signals. The remaining hardware of the device is identical to that of the supercharging device of the first embodiment.

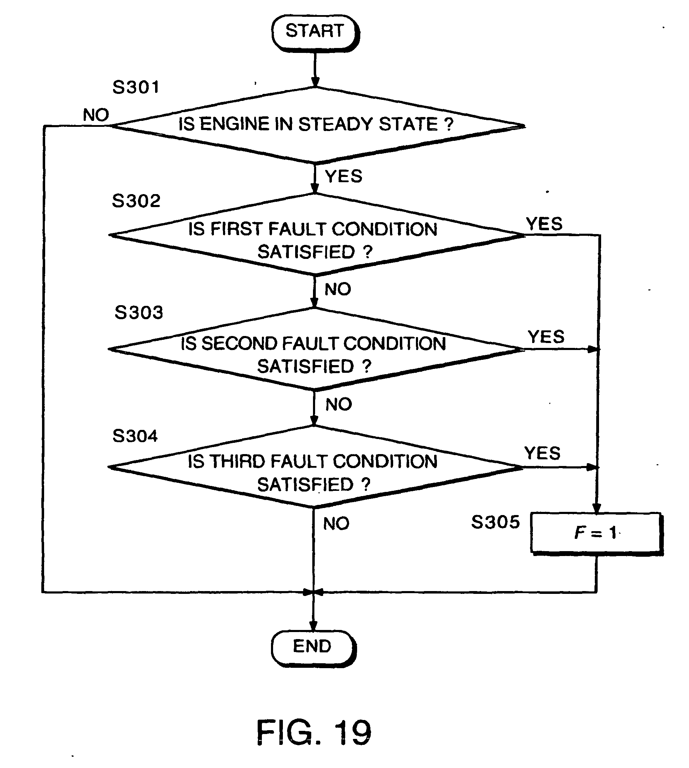

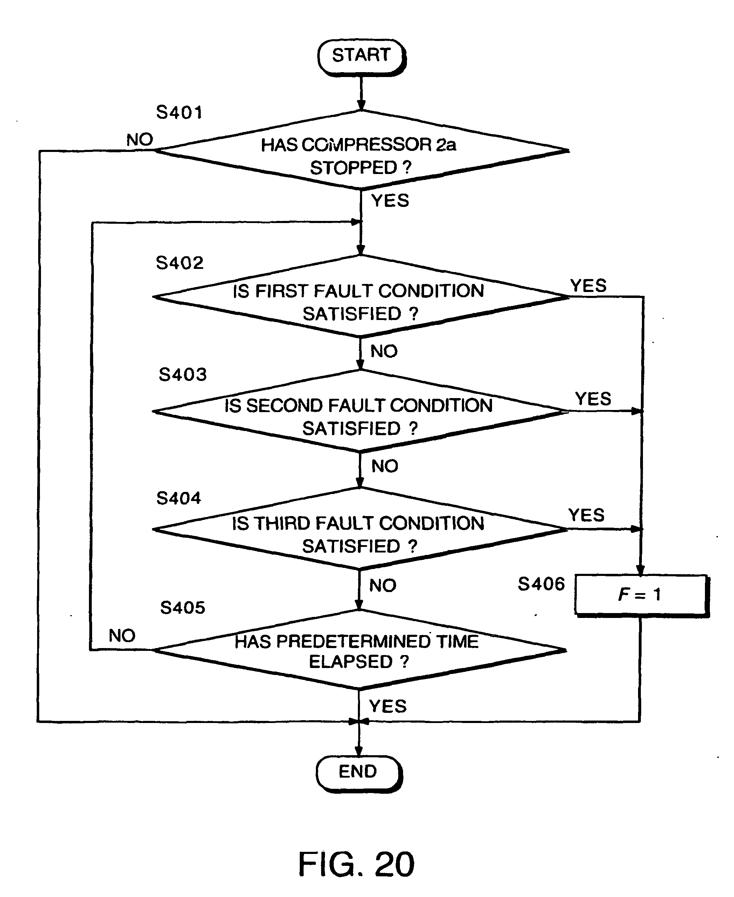

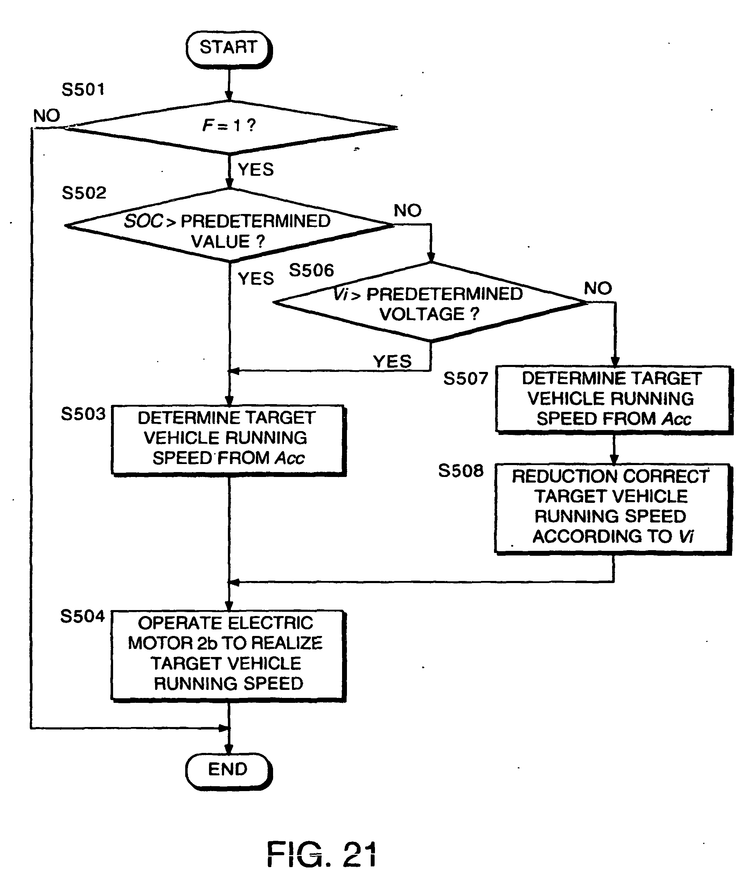

The controller 4 according to this embodiment performs the initial supercharging control routine of the first embodiment, second embodiment or seventh embodiment, and diagnoses faults in the bypass valve 3 by performing the routine for fault diagnosis of the bypass valve 3 shown in FIGS. 19 and 20. It also performs the fault processing routine shown in FIG. 21 to ensure that the intake air amount of the engine 12 is not deficient when there is a fault in the bypass valve 3. Herein, a fault of the bypass valve 3 means that the bypass valve 3 does not move from the closed position.

FIG. 19 shows the fault diagnosis routine in the steady state. This routine is performed at an interval of ten milliseconds at the same time as the initial supercharging control routine while the engine 12 is operating.

First, in a step S301, the controller 4 determines-whether or not the engine 12 is in a steady state. Specifically, the state where the rotation speed $Nc$ of the compressor 2a detected by the rotation speed sensor 11 is zero continues for a predetermined time, is determined as the steady state. If the state is not the steady state, the controller 4 terminates the routine immediately without performing further processing. In the steady state, in step S302, the controller 4 determines whether or not a first fault condition is satisfied.

The first fault condition is described below.

If the bypass valve 3 is fixed in the closed position, when the compressor 2a is not operated, or after a certain time has elapsed after termination of operation of the compressor 2a, the pressure of the intake passage 21 downstream of the compressor 2a is a highly negative pressure. When the compressor 2a stops, air can hardly pass the compressor 2a or the bypass valve 3 which is fixed in the closed position, so the flow of air from the intake passage 20 to the intake passage 21 will almost be shut off. If the engine 12 aspirates air in this state, the intake passage 21 will go to very high negative pressure. Therefore, in the step S302, it can be determined whether or not this first fault condition is satisfied by determining whether or not the pressure detected by the pressure sensor 9 is less than a preset pressure. Herein, the present pressure is set to, for example, 10 kilopascals (kPa).

When the first fault condition is satisfied in the step S302, the controller 4 performs the processing of a step S305.

When the first fault condition is not satisfied, the controller 4 determines whether or not a second fault condition is satisfied in a step S303.

The second fault condition is described below.

If the bypass valve 3 is fixed in the closed position, when the compressor 2a is not operated, or after a certain time has elapsed after termination of operation of the compressor 2a, the intake air flowrate $Qa$ detected by the air flowmeter 5 decreases compared to the intake air flowrate of the engine 12 during normal operation which can be found from the opening $TVO$ of the throttle 31a, and the rotation speed $Ne$ of the engine 12. This is because, as air cannot pass either the compressor 2a or the bypass valve 3, the intake air flowrate of the intake passage 6 falls. It can be determined whether or not the second fault condition is satisfied by determining whether or not the intake air flowrate $Qa$ is less than the intake air flowrate of the engine 12 calculated from the opening $TVO$ of throttle 31a, and the rotation speed $Ne$ of the engine 12.

When the second fault condition is satisfied in the step S303, the controller 4 performs the processing of the step S305. When the second fault condition is not satisfied, the controller 4 determines whether or not a third fault condition is satisfied in a step S304.

The third fault condition is described below.

When the compressor 2a is not operated, or after a certain time has elapsed after terminating operation of the compressor 2a, even when the controller 4 performs the initial supercharging control routine according to any of the first embodiment, second embodiment or seventh embodiment, the valve 3 must be open as a result of the processing of the step S20 or step S103.

However, when the bypass valve 3 is fixed in the closed position regardless of the processing of the step S20 or step S103, the signal inputted into the controller 4 from the opening and closing sensor 53 continues showing the closed position. Therefore, in the steady state, the controller 4 determines that the third fault condition is satisfied when the signal of the opening and closing sensor 53 continues showing the closed position.

When the third fault condition is satisfied in the step S304, the controller 4 performs the processing of the step S305.

When the third fault condition is not satisfied, the controller 4 terminates the routine.

As mentioned above, in the determination of the steps S302-S304, if any of the first-third fault conditions is satisfied, the controller 4 will perform the processing of the step S305. When none of the first-third fault conditions is satisfied, the controller 4 terminates the routine without performing anything. In the step S305, the controller 4 sets a fault flag $F$ showing that a fault occurred in the bypass valve 3 to unity, and terminates the routine. The fault flag $F$ takes the value of either zero or unity, and its initial value is zero.

Next, referring to FIG.20, the fault diagnosis routine immediately after supercharging stops will be described.

This routine is performed only once when power supply to the electric motor 2a from the controller 4 is stopped.

First, in a step S401, the controller 4 determines whether or not the compressor 2a has stopped based on the detection speed $Nc$ of the rotation speed sensor 11. When the compressor 2a has not stopped, fault diagnosis of the bypass valve 3 is difficult, so the controller 4 terminates the routine immediately without performing further processing.

When the compressor 2a has stopped, the controller 4, in a step S402, determines whether or not the first fault condition is satisfied. When the first fault condition is not satisfied, in a step S403, it is determined whether or not the second fault condition is satisfied. When the second fault condition is not satisfied, in a step S404, it is determined whether or not the third fault condition is satisfied. The first-third fault conditions are identical to the first-third fault conditions of the routine of FIG. 19.

When one of the fault conditions is satisfied, in a step S406, the controller 4 sets the fault flag $F$ to unity and terminates the routine. When any of the first-third fault conditions is not satisfied, in the step S405, the controller 4 determines whether or not a predetermined time has elapsed since starting execution of the routine. If the predetermined time has not elapsed, the determination of the steps S402-404 is repeated. If the predetermined time has elapsed in the step S405, the controller 4 terminates the routine.

The fault diagnosis algorithms of the routine of FIG. 19 and the routine of FIG.20 are identical, and the reason for separating them is as follows. Specifically, whereas according to the steady state routine of FIG. 19, diagnosis is performed periodically, in the routine immediately after supercharging stops of FIG.20, diagnosis is repeated at a shorter interval during a transition period from when the compressor 2a stops until a predetermined time has elapsed. Thus, by separating the routines and shortening the diagnostic interval immediately after the compressor 2a stops, a fault of the bypass valve 3 can be immediately detected.

In the routines of FIGs. 19 and 20, to enhance determination accuracy, the first-third fault conditions are determined, but the order of these determinations can be set arbitrarily. Also, the fault flag *F* may be set by determining only one or two of the first-third fault conditions.

Among the first-third fault determinations, the determination of the first fault condition uses the detection pressure of the pressure sensor 9. The pressure sensor 9 is a sensor which detects the pressure *P2* used for the initial supercharging control routine as mentioned above, and the fault condition can be determined using the existing sensor. For the determination of the second fault condition, the detection data from the air flowmeter 5, throttle opening sensor 54 and-engine rotation speed sensor 48 are used. These sensors are generally used for the usual operation control of the engine 12, and the fault condition can be determined using the existing sensors. For the determination of the third fault condition, the closed position signal of the bypass valve 3 detected by the opening and closing sensor 53, is used. This sensor must be provided for fault diagnosis, and as it directly detects whether or not the bypass valve 3 is closed, the fixing of the bypass valve 3 in the closed position can be detected without fail.

Next, referring to FIG.21, the fault processing routine performed by the controller 4 will be described. This routine is also performed at an interval of ten milliseconds at the same time as the initial supercharging control routine during operation of the engine 12.

First, in a step S501, the controller 4 determines whether or not the fault flag *F* is unity. When the fault flag *F* is not unity, a fault has not occurred in the bypass valve 3, so the controller 4 terminates the routine immediately without performing further processing. When the fault flag *F* is unity, in a step S502, the controller 4 determines the state of charge *SOC* of the battery based on the input signal from the *SOC* sensor 55. When *SOC* is more than a predetermined value, the controller 4 performs processing of a step S503

When *SOC* is less than a predetermined value, the controller 4 determines whether or not the generation voltage *Vi* of the alternator detected by the ammeter 49 in the step S506 is more than a predetermined voltage. When the generation voltage *Vi* is more than the predetermined voltage, the controller 4 performs the processing of a step S503.

In the step S503, the controller 4 determines a target running speed of the vehicle based on the accelerator depression amount *Acc* detected by the accelerator pedal depression sensor 56.

After the processing of the step S503, the controller 4 performs the processing of a step S504.

On the other hand, in a step S506, when the generation voltage *Vi* is less than the predetermined voltage in a step S507, the controller 4 determines the target running speed of the vehicle based on the accelerator pedal depression amount *Acc* detected by the accelerator pedal depression sensor 56. In a following step S508, the controller 4 reduction corrects the target running speed according to the generation voltage *Vi*. After the processing of the step S508, the controller 4 performs the processing of a step S504.

In the step S504, the controller 4 supplies power to the electric motor 2b so that an intake air volume corresponding to the target running speed may be realized. After the processing of the step S504, the controller 4 terminates the routine.

If the fault flag *F* is set to unity by the above process, the controller 4 supplies power to the electric motor 2b within a range permitted by the battery capacity or the alternator generation power, and operates the compressor 2a accordingly. In this way, the air amount supplied to the engine 12 is secured so that a running speed corresponding to the accelerator pedal depression may be realized. Therefore, even when the bypass valve 3 is fixed in the closed position, the vehicle can run at a speed corresponding to the accelerator pedal depression.

Herein, the accelerator pedal depression represents the speed intended by the driver of the vehicle.

On the other hand, when there is not much battery capacity or alternator power available to drive the electric motor 2b, the target running speed is reduction corrected, and the power according to the running speed after correction is supplied to the electric motor 2b. By repeatedly performing this routine, the target running speed gradually falls.

Thus, since air is supplied to the engine 12 using available electric energy even if the bypass valve 3 is fixed in the closed position, the operation of the engine 12 does not stop immediately, and the vehicle can be driven to a place where the fault can be repaired.

In this embodiment, as the state of charge *SOC* of the battery is detected, it is possible also to detect the deterioration of the battery itself at an early stage.

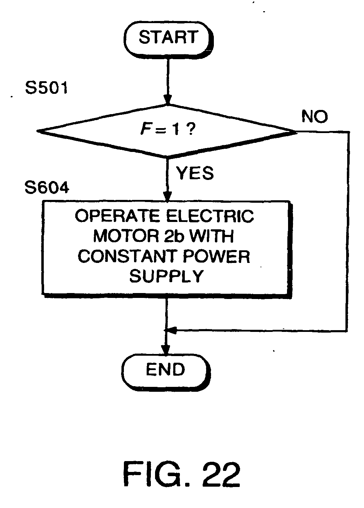

Next, referring to FIG. 22, a tenth embodiment of this invention will be described.

This embodiment relates to the fault processing routine, wherein the controller 4 performs the fault processing routine shown in FIG. 22 instead of the fault processing routine shown in FIG. 21. The remaining construction of the supercharging device of this embodiment is identical to that of the supercharging device according to the ninth embodiment.

Referring to FIG. 22, this routine omits the Steps S502, S503 and steps S506-S508 from the routine of FIG. 21, and replaces the step S504 by a step S604. In the step S501, the controller 4 determines whether or the fault determination flag $F$ is unity. When the fault flag $F$ is not unity, the routine is terminated immediately. When the fault flag $F$ is unity, the controller 4 supplies power to the electric motor 2b in the step S604 and operates the compressor 2a.

In this case, the power supplied to the electric motor 2b is a constant value set based on the intake air amount of the engine 12 required for the vehicle to run on its own.

According to this embodiment, when the bypass valve 3 is fixed in the closed position, the electric motor 2b is driven so that an air amount sufficient for the vehicle to run on its own is supplied to the engine 12 regardless of the state of the battery or alternator, or the driver's intention, so the distance which can be run after the bypass valve 3 is fixed in a closed position becomes longer than in the supercharging device according to the ninth embodiment.

Although the invention has been described above by reference to certain embodiments of the invention, the invention is not limited to the embodiments described above. Modifications and variations of the embodiments described above will occur to those skilled in the art, in light of the above teachings.

For example, in each of the above embodiments, the parameters required for control are detected using sensors, but this invention can be applied to any supercharging device which can perform the claimed control using the claimed parameters regardless of how the parameters are acquired.

The embodiments of this invention in which an exclusive property or privilege is claimed are defined as follows:

## Claims

1. A supercharging device for an internal combustion engine (12), the engine (12) comprising an intake passage (6, 20, 21), the device comprising:

   a first compressor (1a) installed in the intake passage (6, 20, 21), the compressor (1a) being driven by exhaust gas energy and supercharging intake air in the intake passage (6, 20, 21); a second compressor (2a) installed in the intake passage (20, 21) between the first compressor (1a) and engine (12), the second compressor (2a) being driven by an electric motor (2b) and supercharging air discharged from the first compressor (1a); and
   a bypass valve (3) which bypasses the second compressor (2a), the bypass valve (3) being open when the second compressor (2a) is not operating, and starting to close at a certain time after the second compressor (2a) starts to operate;

   **characterized by**
   a sensor (5) which detects a total intake air flowrate of the engine (12); and
   a programmable controller (4) programmed to calculate a target rotation speed of the second compressor (2a) according to the total intake air flowrate of the engine (12) (S6), calculate a predicted rotation speed of the second compressor (2a) after a predetermined time has elapsed from the present time (S107), and start to close the bypass valve (3) when the predicted rotation speed has reached the target rotation speed (S108, S109).

2. The supercharging device as defined in claim 1, wherein the predetermined time is set equal to the time required for closure of the bypass valve (3).

3. The supercharging device as defined in claim 1 or claim 2, wherein the supercharging device further comprises a sensor (11) which detects a rotation speed of the second compressor (2a), and the controller (4) is further programmed to calculate the predicted rotation speed based on the rotation speed of the second compressor (2a) (S204).

4. The supercharging device as defined in claim 3, wherein the controller (4) is further programmed to calculate a rotation increase rate estimation value from the rotation speed of the second compressor (2a) at the present time, the rotation increase rate estimation value decreasing according to an increase of the rotation speed of the second compressor (2a), and calculate the predicted rotation speed from the rotation increase rate estimation value and the rotation speed of the second compressor (2a) at the present time (S204).

5. The supercharging device as defined in claim 4, wherein the controller (4) is further programmed to calculate a real rotation increase rate from the rotation speed of the second compressor (2a), and correct the rotation increase rate estimation value based on the real rotation increase rate (S205).

6. The supercharging device as defined in any one of claim 3 through claim 5, wherein the supercharging device further comprises a drive motor (2b) which drives the second compressor (2a) and a sensor (34) which detects a current supplied to the electric motor (2b), and the controller (4) is further programmed to correct the predicted rotation speed based on the current supplied to the electric motor (2b) of the second compressor (2a) (S206).

7. The supercharging device as defined in any one of claim 3 through claim 6, wherein the supercharging device further comprises a drive motor (2b) which drives the second compressor (2a) and a sensor (33) which detects a voltage supplied to the electric motor (2b), and the controller (4) is further programmed to correct the predicted rotation speed based on the voltage supplied to the electric motor (2b) of the second compressor (2a) (S207).

8. The supercharging device as defined in any one of claim 1 through claim 7, wherein the supercharging device further comprises a sensor (5, 9, 48, 49, 53, 54) which detects a parameter relating to fixing of the bypass valve (3) in a closed position, and a programmable controller (4) programmed to determine whether or not the bypass valve (3) is fixed in the closed position based on the parameter (S302-S304, S402, S404), and supply power to the electric motor (2b) to operate the second compressor (2a) when the bypass valve (3) is fixed in the closed position (S504, S604).

9. The supercharging device as defined in claim 8, wherein the controller (4) is further programmed to perform a determination as to whether or not the bypass valve (3) is fixed in the closed position at a fixed interval after a predetermined time has elapsed from startup of the second compressor (2a) (S302-S304), and perform the determination at a shorter interval than the fixed time interval until the predetermined time has elapsed from startup of the second compressor (2a) (S402-S404).

10. The supercharging device as defined in claim 8 or claim 9, wherein the controller (4) is further programmed to supply a fixed power to the electric motor (2b) when the bypass valve (3) is fixed in the closed position.

11. The supercharging device as defined in claim 8 or claim 9, wherein the internal combustion engine (12) is an engine (12) which drives a vehicle, the vehicle comprising an accelerator pedal, the supercharging device further comprises a sensor (53) which detects an accelerator pedal depression, and the controller (4) is further programmed to set a target running speed of the vehicle according to the accelerator pedal depression (S503), and to supply power to the electric motor (2b) according to the target running speed (S504).

12. The supercharging device as defined in any one of claim 8 through claim 11, wherein the vehicle further comprises an alternator driven by the engine (12) and a battery which stores power generated by the alternator and supplies power to the electric motor (12), the supercharging device further comprises a sensor (55) which detects a state of charge of the battery and a sensor (49) which detects a power generation state of the alternator, and the controller (4) is further programmed to decrease the target running speed when the state of charge of the battery has not reached a predetermined state of charge and the power generation state of the alternator has not reached a predetermined power generation state (S502, S506, S508).

13. The supercharging device as defined in any one of claim 8 through claim 12, wherein the parameter detecting sensor (5, 9, 48, 49, 53, 54) comprises a pressure sensor (9) which detects a pressure of the intake passage (21) between the second compressor (2a) and the engine (12), and the controller (4) is further programmed to determine that the bypass valve (3) is fixed in the closed position when the pressure is equal to or less than a predetermined pressure after the operation of the second compressor (2a) has stopped (S302, S304).

14. The supercharging device as defined in any one of claim 8 through claim 13, wherein the internal combustion engine (12) is an engine (12) which drives a vehicle, the vehicle comprising an accelerator pedal, the engine (12) comprises a throttle (31a) which is installed in the intake passage (21) downstream of the bypass valve (3) and increases or decreases the total intake air flowrate of the engine (12) according to an operation of the accelerator pedal, the parameter detecting sensor (5, 9, 48, 49, 53, 54) comprises the engine total intake air flowrate detecting sensor (5), a rotation speed sensor (48) which detects a rotation speed of the engine (12), and a throttle opening sensor (54) which detects an opening of the throttle (31a), and the controller (4) is further programmed to determine that the bypass valve (3) is fixed in the closed position when the total intake air flowrate of the engine (12) when the operation of the second compressor (2a) has stopped is less than an intake air flowrate of the engine (12) calculated from the rotation speed of the engine (12) and the opening of the throttle (31a) (S303, S304).

15. The supercharging device as defined in any one of claim 8 through claim 14, wherein the parameter detecting sensor (5, 9, 48, 49, 53, 54) comprises an opening and closing sensor (53) which detects whether or not the bypass valve (3) is in the closed position, and the controller (4) is further programmed to determine that the bypass valve (3) is fixed in the closed position when the bypass valve (3) is still in the closed position after the operation of the second compressor (2a) has stopped (S304, S404).

16. The supercharging device as defined in any one of claim 1 through claim 15, wherein the supercharging device further comprises a bypass passage (7) which connects the intake passage (20) upstream of the second compressor (2a) and the intake passage (21) downstream of the second compressor (2a), the bypass valve (3) being provided in the bypass passage (7), and an intercooler (45) which cools the intake air, the intercooler (45) being installed in the intake passage (20) upstream of the second compressor (2a) between a branch point of the intake passage (20) with the bypass passage (7) and the first compressor (1a).

17. The supercharging device as defined in claim 16, wherein the supercharging device further comprises a second intercooler (46) which cools the intake air, the second intercooler (46) being installed in the intake passage (21) downstream of the second compressor (2a)

18. The supercharging device as defined in any one of claims 1 through claim 15, wherein the supercharging device further comprises a bypass passage (7) which connects the intake passage (20) upstream of the second compressor (2a) and the intake passage (21) downstream of the second compressor (2a), the bypass valve (3) being provided in the bypass passage (7), a first intercooler (45), installed in the intake passage (20) upstream of the second compressor (2a) between a branch point of the intake passage (20) with the bypass passage (7) and the second compressor (2a), and a second intercooler (46) installed in the intake passage (21) downstream of the second compressor (2a) between a branch point of the intake passage (21) with the bypass passage (7) and the engine (12).

19. The supercharging device as defined in any one of claim 1 through claim 18, wherein the supercharging device further comprises a speed increase mechanism (42-44) which connects the second compressor (2a) and the electronic motor (2b).

**Patentansprüche**

1. Aufladevorrichtung für eine Brennkraftmaschine (12), wobei der Motor (12) einen Einlasskanal (6, 20, 21) aufweist, wobei die Vorrichtung aufweist; einen ersten Kompressor (1a), installiert in dem Einlasskanal (6, 20, 21), wobei der Kompressor (1a) durch die Energie des Abgases und die aufgeladene Einlassluft in dem Einlasskanal (6, 20, 21) angetrieben wird; einen zweiten Kompressor (2a), installiert in dem Einlasskanal (20, 21) zwischen dem ersten Kompressor (1a) und dem Motor (12), wobei der zweite Kompressor (2a) durch einen Elektromotor (2b) und die aufgeladene Einlassluft, abgegeben von dem ersten Kompressor (1a), angetrieben wird; und ein Bypassventil (3), das den zweiten Kompressor (2a) umgeht, wobei das Bypassventil (3) offen ist, wenn der zweite Kompressor (2a) nicht in Betrieb ist und beginnt nach einer bestimmten Zeit zu schließen, nachdem der zweite Kompressor (2a) zu arbeiten begonnen hat,
**gekennzeichnet durch**
einen Sensor (5), der die gesamte Einlassluft- Strömungsrate des Motors (12) erfasst; und eine programmierbare Steuerung (4), programmiert um eine Ziel- Drehzahl des zweiten Kompressors (2a) entsprechend der gesamten Einlassluft- Strömungsrate des Motors (12) (S6) zu berechnen, eine vorhergesagte Drehzahl des zweiten Kompressors (2a) zu berechnen, nachdem eine vorbestimmte Zeit von der gegenwärtigen Zeit (S107) verstrichen ist, und zu beginnen, das Bypassventil (3) zu schließen, wenn die vorhergesagte Drehzahl die Ziel- Drehzahl erreicht hat (S108, S109).

2. Aufladevorrichtung nach Anspruch 1, wobei die vorbestimmte Zeit gleich gesetzt ist zu der für das Schließen des Bypassventils (3) erforderlichen Zeit.

3. Aufladevorrichtung nach Anspruch 1 oder Anspruch 2, wobei die Aufladevorrichtung außerdem einen Sensor (11) aufweist, der eine Drehzahl des zweiten Kompressors (2a) erfasst und die Steuerung außerdem programmiert ist, die vorhergesagte Drehzahl auf der Grundlage der Drehzahl des zweiten Kompressors (2a) zu berechnen (S204).

4. Aufladevorrichtung nach Anspruch 3, wobei die Steuerung (4) außerdem programmiert ist, einen Drehzahlerhöhungsraten- Abschätzungswert aus der Drehzahl des zweiten Kompressors (2a) zu der gegenwärtigen Zeit zu berechnen, wobei sich der Drehzahlerhöhungsraten- Abschätzungswert entsprechend einer Erhöhung der Drehzahl des zweiten Kompressors (2a) vermindert, und Berechnen der vorhergesagten Drehzahl aus dem Drehzahlerhöhungsraten- Abschätzungswert und der Drehzahl des zweiten Kompressors (2a) zu dem gegenwärtigen Zeitpunkt (S204).

5. Aufladevorrichtung nach Anspruch 4, wobei die Steuerung (4) außerdem programmiert ist, die tatsächliche Drehzahlerhöhungsrate aus der Drehzahl des zweiten Kompressors (2a) zu berechnen und den Drehzahlerhöhungsraten- Abschätzungswert auf der Grundlage der tatsächlichen Drehzahlerhöhungsrate zu korrigieren (S205).

6. Aufladevorrichtung nach einem der Ansprüche 3 bis 5, wobei die Aufladevorrichtung außerdem einen Antriebsmotor (2b) aufweist, der den zweiten Kompressor (2a) antreibt und einen Sensor (34), der einen zu dem Elektromotor (2b) eingespeisten Strom erfasst, und die Steuerung (4) außerdem programmiert ist, die vorhergesagte Drehzahl auf der Grundlage des in den Elektromotor (2b) des zweiten Kompressors (2a) eingespeisten Stromes zu korrigieren (S206).

7. Aufladevorrichtung nach jedem von Anspruch 3 bis Anspruch 6, wobei die Aufladevorrichtung außerdem einen Antriebsmotor (2b) aufweist, der den zweiten Kompressor (2a) antreibt und einen Sensor (33), der eine an den Elektromotor (2b) angelegten Spannung erfasst, und die Steuerung (4) außerdem programmiert ist, die vorhergesagte Drehzahl auf der Grundlage der an den Elektromotor (2b) angelegten Spannung des zweiten Kompressors (2a) zu korrigieren (S207).

8. Aufladevorrichtung nach einem der Ansprüche 1 bis 7, wobei die Aufladevorrichtung außerdem aufweist einen Sensor (5, 9, 48, 49, 53, 54), der einen Parameter in Bezug auf die Festlegung des Bypassventils (3) in der geschlossenen Position erfasst, und eine programmierbare Steuerung (4), die programmiert ist, festzustellen, ob das Bypassventil (3) in der geschlossenen Position fixiert ist, oder nicht, auf der Grundlage des Parameters (S302-S304, S402, S404), und Zuführen von Energie zu dem Elektromotor (2b), um den zweiten Kompressor (2a) zu betätigen, wenn das Bypassventil (3) in der geschlossenen Position festgelegt ist (S504, S604).

9. Aufladevorrichtung nach Anspruch 8, wobei die Steuerung (4) außerdem programmiert ist, eine Bestimmung vorzunehmen, ob das Bypassventil (3) in der geschlossenen Position in einem feststehenden Intervall festgelegt ist, oder nicht, nachdem eine vorbestimmte Zeit von dem Starten des zweiten Kompressors (2a) vergangen ist (S302- S304), und Ausführen der Bestimmung in einem kürzeren Intervall als das feststehende Zeitintervall, bis die vorbestimmte Zeit von dem Starten des zweiten Kompressors (2a) vergangen ist (S402- S404).

10. Aufladevorrichtung nach Anspruch 8 oder Anspruch 9, wobei die Steuerung (4) außerdem programmiert ist, eine festgelegte Energie zu dem Elektromotor (2b) zuzuführen, wenn das Bypassventil (3) in der geschlossenen Position festgelegt ist.

11. Aufladevorrichtung nach Anspruch 8 oder Anspruch 9, wobei die Brennkraftmaschine (12) ein Motor (12) ist, der ein Fahrzeug antreibt, wobei das Fahrzeug ein Beschleunigerpedal aufweist, die Aufladevorrichtung außerdem einen Sensor (53) aufweist, der ein Niederdrücken des Beschleunigers erfasst, und die Steuerung (4) außerdem programmiert ist, eine Ziel- Fahrgeschwindigkeit des Fahrzeuges entsprechend des Beschleunigerniederdrückens festzulegen (S503), und Energie dem Elektromotor (2b) entsprechend der Ziel- Fahrgeschwindigkeit zuzuführen (S504).

12. Aufladevorrichtung nach einem der Ansprüche 8 bist Anspruch 11, wobei das Fahrzeug außerdem aufweist eine Wechselstrommaschine, angetrieben durch den Motor (12), und eine Batterie, die durch die Wechselstrommaschine erzeugte Energie speichert und die Energie zu dem Elektromotor (12) zuführt, wobei die Aufladevorrichtung außerdem einen Sensor (55) aufweist, der einen Ladezustand der Batterie erfasst, und einen Sensor (49), der einen Energieerzeugungszustand der Wechselstrommaschine erfasst, und die Steuerung (4) außerdem programmiert ist, die Ziel- Fahrgeschwindigkeit zu vermindern, wenn der Ladezustand der Batterie einen vorbestimmten Ladezustand nicht erreicht hat und der Energieerzeugungszustand der Wechselstrommaschine einen vorbestimmten Energieerzeugungszustand nicht erreicht hat (S502, S506, S508).

13. Aufladevorrichtung nach einem der Ansprüche 8 bist Anspruch 12, wobei der Parametererfassungssensor (5, 9, 48, 49, 53, 54) einen Drucksensor (9) aufweist, der einen Druck des Einlasskanales (21) zwischen dem zweiten Kompressor (2a) und dem Motor (12) erfasst, und die Steuerung (4) außerdem programmiert ist zu bestimmen, dass das Bypassventil (3) in der geschlossenen Position feststehend ist, wenn der Druck gleich zu oder geringer als ein vorbestimmter Druck ist, nachdem der Betrieb des zweiten Kompressors (2a) gestoppt worden ist (S302, S304).

14. Aufladevorrichtung nach einem der Ansprüche 8 bist 13, wobei die Brennkraftmaschine (12) ein Motor (12) ist, der ein Fahrzeug antreibt, wobei das Fahrzeug ein Beschleunigerpedal aufweist, der Motor (12) eine Drossel (31a) aufweist, die in dem Einlasskanal (21) stromab des Bypassventils (3) installiert ist und die die gesamte Einlassluft- Strömungsrate des Motors (12) entsprechend einer Betätigung des Beschleunigerpedals erhöht oder vermindert, wobei der Parametererfassungssensor (5, 9, 48, 49, 53, 54) aufweist den Strömungsraten- Erfassungssensor (5) der gesamten Einlassluft des Motors, einen Drehzahlsensor (48), der eine Drehzahl des Motors (12) erfasst, und einen Drosselöffnungssensor (54), der eine Öffnung der Drossel (31a) erfasst, und die Steuerung außerdem programmiert ist zu bestimmen, dass das Bypassventil (3) in der geschlossenen Position festgelegt ist, wenn die gesamte Einlassluft- Strömungsrate des Motors (12), wenn der Betrieb des zweiten Kompressors (2a) gestoppt worden ist, geringer als eine Einlassluft- Strömungsrate des Motors (12), berechnet aus der Drehzahl des Motors (12) und der Öffnung der Drossel (31a) (S303, S304), ist.

15. Aufladevorrichtung nach einem der Ansprüche 8 bist 14, wobei der Parametererfassungssensor (5, 9, 48, 49, 53, 54) einen Öffnungs- und Schließsensor (53) aufweist, der erfasst, ob das Bypassventil (3) in der geschlossenen Position ist, oder nicht, und die Steuerung (4) außerdem programmiert ist, zu bestimmen, dass das Bypassventil (3) in der geschlossenen Position festgelegt ist, wenn das Bypassventil (3) noch in der geschlossenen Position ist, nachdem der Betrieb des zweiten Kompressors (2a) gestoppt worden ist (S304, S404).

16. Aufladevorrichtung nach einem der Ansprüche 8 bist 15, wobei die Aufladevorrichtung außerdem aufweist einen Bypass- Kanal (7), der den Einlasskanal (20) stromauf des zweiten Kompressors (2a) und den Einlasskanal (21) stromab des zweiten Kompressors (2a) verbindet, wobei das Bypassventil (3) in dem Bypass-Kanal (7) vorgesehen ist, und einen Zwischenkühler (45), der die Einlassluft kühlt, wobei der Zwischenkühler (45) in dem Einlasskanal (20) stromauf des zweiten Kompressors (2a) zwischen einem Verzweigungspunkt des Einlasskanales (20) mit dem Bypass- Kanal (7) und dem ersten Kompressor (1a) installiert ist.

17. Aufladevorrichtung nach Anspruch 16, wobei die Aufladevorrichtung außerdem einen zweiten Zwischenkühler (46) aufweist, der die Einlassluft kühlt, wobei der zweite Zwischenkühler (46) in dem Einlasskanal (21) stromab des zweiten Kompressors (2a) zwischen einem Verzweigungspunkt des Einlasskanals (21) mit dem Bypass- Kanal (7) und dem Motor (12) installiert ist.

18. Aufladevorrichtung nach einem der Ansprüche 1 bis 15, wobei die Aufladevorrichtung außerdem aufweist einen Bypass- Kanal (7), der den Einlasskanal (20) stromauf des zweiten Kompressors (2a) und den Einlasskanal (21) stromab des zweiten Kompressors (2a) verbindet, wobei das Bypassventil (3) in dem Bypass-Kanal (7) vorgesehen ist, ein erster Zwischenkühler (45), installiert in dem Einlasskanal (20) stromauf des zweiten Kompressors (2a) zwischen dem Verzweigungspunkt des Einlasskanales (20) mit dem Bypass- Kanal (7) und dem zweiten Kompressor (2a), und ein zweiter Zwischenkühler (46), installiert in dem Einlasskanal (21) stromab des zweiten Kompressors (2a) zwischen einem Verzweigungspunkt des Einlasskanals (21) mit dem Bypass- Kanal (7) und dem Motor (12).

19. Aufladevorrichtung nach einem der Ansprüche 1 bist 18, wobei die Aufladevorrichtung außerdem eine Geschwindigkeitserhöhungsvorrichtung (42-44) aufweist, die den zweiten Kompressor (2a) und den Elektromotor (2b) verbindet.

## Revendications

1. Dispositif de suralimentation pour un moteur à combustion interne (12), le moteur (12) comprenant un passage d'admission (6, 20, 21), le dispositif comprenant:

   un premier compresseur (1a) installé dans le passage d'admission (6, 20, 21), le compresseur (1a) étant entraîné par l'énergie de gaz d'échappement et l'air d'admission de suralimentation dans le passage d'admission (6, 20, 21);
   un deuxième compresseur (2a) installé dans le passage d'admission (20, 21) entre le premier compresseur (1a) et le moteur (12), le deuxième compresseur (2a) étant entraîné par un moteur électrique (2b) et l'air de suralimentation refoulé depuis le premier compresseur (1a); et
   une soupape de dérivation (3) qui dérive le deuxième compresseur (2a), la soupape de dérivation (3) étant ouverte lorsque le deuxième compresseur (2a) n'est pas en fonctionnement, et commençant à se fermer à un certain temps après que le deuxième compresseur (2a) commence à fonctionner;

   **caractérisé par**
   un capteur (5) qui détecte un débit d'air d'admission total du moteur (12); et
   un dispositif de commande programmable (4) programmé pour calculer une vitesse de rotation cible du deuxième compresseur (2a) selon le débit d'air d'admission total du moteur (12) (S6), calculer une vitesse de rotation prévue du deuxième compresseur (2a) après qu'un temps prédéterminé s'est écoulé à partir du temps présent (S107) et commencer à fermer la soupape de dérivation (3) lorsque la vitesse de rotation prévue a atteint la vitesse de rotation cible (S108, S109).

2. Dispositif de suralimentation selon la revendication 1, dans lequel le temps prédéterminé est défini égal au temps requis pour la fermeture de la soupape de dérivation (3).

3. Dispositif de suralimentation selon la revendication 1 ou la revendication 2, dans lequel le dispositif de suralimentation comprend en outre un capteur (11) qui détecte une vitesse de rotation du deuxième compresseur (2a), et le dispositif de commande (4) est en outre programmé pour calculer la vitesse de rotation prévue en fonction de la vitesse de rotation du deuxième compresseur (2a) (S204).

4. Dispositif de suralimentation selon la revendication 3, dans lequel le dispositif de commande (4) est en outre programmé pour calculer une valeur d'estimation de taux d'augmentation de rotation à partir de la vitesse de rotation du deuxième compresseur (2a) au temps présent, la valeur d'estimation de taux d'augmentation de rotation diminuant selon une augmentation de la vitesse de rotation du deuxième compresseur (2a), et calculer la vitesse de rotation prévue à partir de la valeur d'estimation de taux d'augmentation de rotation et de la vitesse de rotation du deuxième compresseur (2a) au temps présent (S204).

5. Dispositif de suralimentation selon la revendication 4, dans lequel le dispositif de commande (4) est en outre programmé pour calculer un taux d'augmentation de rotation réel à partir de la vitesse de rotation du deuxième compresseur (2a), et corriger la valeur d'estimation de taux d'augmentation de rotation en fonction du taux d'augmentation de rotation réel (S205).

6. Dispositif de suralimentation selon l'une quelconque des revendications 3 à 5, dans lequel le dispositif de suralimentation comprend en outre un moteur d'entraînement (2b), qui entraîne le deuxième compresseur (2a) et un capteur (34) qui détecte un courant fourni au moteur électrique (2b), et le dispositif de commande (4) est en outre programmé pour corriger la vitesse de rotation prévue en fonction du courant fourni au moteur électrique (2b) du deuxième compresseur (2a) (S206).

7. Dispositif de suralimentation selon l'une quelconque des revendications 3 à 6, dans lequel le dispositif de suralimentation comprend en outre un moteur d'entraînement (2b) qui entraîne le deuxième compresseur (2a) et un capteur (33) qui détecte une tension fournie au moteur électrique (2b) et le dispositif de commande (4) est en outre programmé pour corriger la vitesse de rotation prévue en fonction de la tension fournie au moteur électrique (2b) du deuxième compresseur (2a) (S207).

8. Dispositif de suralimentation selon l'une quelconque des revendications 1 à 7, dans lequel le dispositif de suralimentation comprend en outre un capteur (5, 9, 48, 49, 53, 54) qui détecte un paramètre concernant la fixation de la soupape de dérivation (3) dans une position fermée, et un dispositif de commande programmable (4) programmé pour déterminer si oui ou non la soupape de dérivation (3) est fixée dans la position fermée en fonction du paramètre (S302-S304, S402, S404), et fournir de l'énergie au moteur électrique (2b) pour actionner le deuxième compresseur (2a) lorsque la soupape de dérivation (3) est fixée dans la position fermée (S504, S604).

9. Dispositif de suralimentation selon la revendication 8, dans lequel le dispositif de commande (4) est en outre programmé pour réaliser une détermination de si oui ou non la soupape de dérivation (3) est fixée dans la position fermée à un intervalle fixe après qu'un temps prédéterminé s'est écoulé depuis le démarrage du deuxième compresseur (2a) (S302-S304), et réaliser la détermination à un intervalle plus court que l'intervalle de temps fixe jusqu'à ce que le temps prédéterminé se soit écoulé depuis le démarrage du deuxième compresseur (2a) (S402-S404).

10. Dispositif de suralimentation selon la revendication 8 ou la revendication 9, dans lequel le dispositif de commande (4) est en outre programmé pour fournir une énergie fixe au moteur électrique (2b) lorsque la soupape de dérivation (3) est fixée dans la position fermée.

11. Dispositif de suralimentation selon la revendication 8 ou la revendication 9, dans lequel le moteur à combustion interne (12) est un moteur (12) qui entraîne un véhicule, le véhicule comprenant une pédale d'accélérateur, le dispositif de suralimentation comprend en outre un capteur (53) qui détecte un enfoncement de pédale d'accélérateur, et le dispositif de commande (4) est en outre programmé pour définir une vitesse de roulement cible du véhicule selon l'enfoncement de pédale d'accélérateur (S503) et pour fournir de l'énergie au moteur électrique (2b) selon la vitesse de roulement cible (S504).

12. Dispositif de suralimentation selon l'une quelconque des revendications 8 à 11, dans lequel le véhicule comprend en outre un alternateur entraîné par le moteur (12) et une batterie qui stocke de l'énergie générée par l'alternateur et fournit l'énergie au moteur électrique (12), le dispositif de suralimentation comprend en outre un capteur (55) qui détecte un état de charge de la batterie et un capteur (49) qui détecte un état de génération de puissance de l'alternateur, et le dispositif de commande (4) est en outre programmé pour réduire la vitesse de roulement cible lorsque l'état de charge de la batterie n'a pas atteint un état de charge prédéterminé et l'état de génération de puissance de l'alternateur n'a pas atteint un état de génération de puissance prédéterminé (S502, S506, S508).

13. Dispositif de suralimentation selon l'une quelconque des revendications 8 à 12, dans lequel le capteur de détection de paramètre (5, 9, 48, 49, 53, 54) comprend un capteur de pression (9) qui détecte une pression du passage d'admission (21) entre le deuxième compresseur (2a) et le moteur (12), et le dispositif de commande (4) est en outre programmé pour déterminer que la soupape de dérivation (3) est fixée dans la position fermée lorsque la pression est égale ou inférieure à une pression prédéterminée après que l'opération du deuxième compresseur (2a) s'est arrêtée (S302, S304).

14. Dispositif de suralimentation selon l'une quelconque des revendications 8 à 13, dans lequel le moteur à combustion interne (12) est un moteur (12) qui entraîne un véhicule, le véhicule comprenant une pédale d'accélérateur, le moteur (12) comprend une vanne papillon (31a) qui est installée dans le passage d'admission (21) en aval de la soupape de dérivation (3) et augmente ou réduit le débit d'air d'admission total du moteur (12) selon une opération de la pédale d'accélérateur, le capteur de détection de paramètre (5, 9, 48, 49, 53, 54) comprend le capteur de détection de débit d'air d'admission total de moteur (5), un capteur de vitesse de rotation (48) qui détecte une vitesse de rotation du moteur (12), et un capteur d'ouverture de vanne papillon (54) qui détecte une ouverture de la vanne papillon (31a), et le dispositif de commande (4) est en outre programmé pour déterminer que la soupape de dérivation (3) est fixée dans la position fermée lorsque le débit d'air d'admission total du moteur (12) lorsque l'opération du deuxième compresseur (2a) s'est arrêtée est inférieur à un débit d'air d'admission du moteur (12) calculé à partir de la vitesse de rotation du moteur (12) et de l'ouverture de la vanne papillon (31a) (S303, S304).

15. Dispositif de suralimentation selon l'une quelconque des revendications 8 à 14, dans lequel le capteur de détection de paramètres (5, 9, 48, 49, 53, 54) comprend un capteur d'ouverture et de fermeture (53) qui détecte si oui ou non la soupape de dérivation (3) est dans la position fermée, et le dispositif de commande (4) est en outre programmé pour déterminer que la soupape de dérivation (3) est fixée dans la position fermée lorsque la soupape de dérivation (3) est encore dans la position fermée après que l'opération du deuxième compresseur (2a) s'est arrêtée (S304, S404).

16. Dispositif de suralimentation selon l'une quelconque des revendications 1 à 15, dans lequel le dispositif de suralimentation comprend en outre un passage de dérivation (7) qui raccorde le passage d'admission (20) en amont du deuxième compresseur (2a) et le passage d'admission (21) en aval du deuxième compresseur (2a), la soupape de dérivation (3) étant prévue dans le passage de dérivation (7), et un refroidisseur intermédiaire (45) qui refroidit l'air d'admission, le refroidisseur intermédiaire (45) étant installé dans le passage d'admission (20) en amont du deuxième compresseur (2a) entre un point de bifurcation du passage d'admission (20) avec le passage de dérivation (7) et le premier compresseur (1a).

17. Dispositif de suralimentation selon la revendication 16, dans lequel le dispositif de suralimentation comprend en outre un deuxième refroidisseur intermédiaire (46) qui refroidit l'air d'admission, le deuxième refroidisseur intermédiaire (46) étant installé dans le passage d'admission (21) en aval du deuxième compresseur (2a) entre un point de bifurcation du passage d'admission (21) avec le passage de dérivation (7) et le moteur (12).

18. Dispositif de suralimentation selon l'une quelconque des revendications 1 à 15, dans lequel le dispositif de suralimentation comprend en outre un passage de dérivation (7) qui raccorde le passage d'admission (20) en amont du deuxième compresseur (2a) et le passage d'admission (21) en aval du deuxième compresseur (2a), la soupape de dérivation (3) étant prévue dans le passage de dérivation (7), un premier refroidisseur intermédiaire (45), installé dans le passage d'admission (20) en amont du deuxième compresseur (2a) entre un point de bifurcation du passage d'admission (20) avec le passage de dérivation (7) et le deuxième compresseur (2a), et un deuxième refroidisseur intermédiaire (46) installé dans le passage d'admission (21) en aval du deuxième compresseur (2a) entre un point de bifurcation du passage d'admission (21) avec le passage de dérivation (7) et le moteur (12).

19. Dispositif de suralimentation selon l'une quelconque des revendications 1 à 18, dans lequel le dispositif de suralimentation comprend en outre un mécanisme d'augmentation de vitesse (42-44) qui raccorde le deuxième compresseur (2a) et le moteur électrique (2b).

FIG. 1

1 TURBOCHARGER
1a COMPRESSOR
1b EXHAUST GAS TURBINE

2 ELECTRIC SUPERCHARGER
2a COMPRESSOR

AIR FLOWMETER

ELECTRIC MOTOR

CONTROLLER

56 ACCELERATOR PEDAL DEPRESSION SENSOR

32 AIR TEMPERATURE SENSOR

11 ROTATION SPEED SENSOR

31 THROTTLE SPEED SENSOR

3b ACTUATOR
8,9 PRESSURE SENSOR
33 VOLT METER
34 AMMETER
56 ACCELERATOR PEDAL DEPRESSION SENSOR

EP 1 391 595 B1

EP 1 391 595 B1

START

S11 — IS ENGINE ACCELERATION REQUIRED?

NO

YES

S12 — $F = 0$ ?

NO

YES

S13 — $F = 0$

S14 — IS COMPRESSOR BEING OPERATED ?

NO

YES

S15 — IS BYPASS VALVE OPEN ?

NO

YES

S18 — $P1 \geq P2$ ?

NO

YES

S17 — $Qs - Qa = 0$ ?

NO

YES

S20 — OPEN BYPASS VALVE

S16 — TURN ON ELECTRIC MOTOR

S19 — CLOSE BYPASS VALVE

S21 — TURN OFF ELECTRIC MOTOR

S22 — $F = 1$

END

FIG. 2

FIG. 3

FIG. 4

START

S11 — IS ENGINE ACCELERATION REQUIRED? — NO / YES

S12 — F = 0? — NO / YES

S13 — F = 0

S14 — IS COMPRESSOR BEING OPERATED? — NO / YES

S15 — IS BYPASS VALVE OPEN? — NO / YES

S16 — TURN ON ELECTRIC MOTOR

S17A — Qb = 0? — NO / YES

S18 — P1 ≥ P2? — NO / YES

S19 — CLOSE BYPASS VALVE

S20 — OPEN BYPASS VALVE

S21 — TURN OFF ELECTRIC MOTOR

S22 — F = 1

END

FIG. 5

23

FIG. 6

1 TURBOCHARGER
1a COMPRESSOR
1c
1b EXHAUST GAS TURBINE

13
5 AIR FLOWMETER
6
51

20
41

3b ACTUATOR
8,9 PRESSURE SENSOR
11 ROTATION SPEED SENSOR

2a COMPRESSOR

2 ELECTRIC SUPERCHARGER

8

50

P1

ELECTRIC MOTOR

2c

3b

3

2b
11
9

4 Qa

Nc

32 AIR TEMPERATURE SENSOR
Ta

CONTROLLER

P2

31a

12

Th

21

31 THROTTLE SPEED SENSOR

EP 1 391 595 B1

FIG. 7

FIG. 8

**FIG. 9**

13

5 AIR FLOWMETER

6

1 TURBOCHARGER

1c

51

1a COMPRESSOR

1b EXHAUST GAS TURBINE

45

20

50

3b ACTUATOR
8,9 PRESSURE SENSOR
11 ROTATION SPEED SENSOR

P1

8

3b

7

3

2 ELECTRIC SUPERCHARGER

2b

2c

9

4

ELECTRIC MOTOR

12

Ta

32 AIR TEMPERATURE SENSOR

CONTROLLER

Nc

11

2a COMPRESSOR

Qa

Th

P2

21

46

31a

31 THROTTLE SPEED SENSOR

EP 1 391 595 B1

EP 1 391 595 B1

START

S100

NO

IS ENGINE ACCELERATION
REQUIRED?

YES

S101

IS COMPRESSOR BEING
OPERATED ?

YES

NO

S105

IS BYPASS VALVE
OPEN ?

NO

S103

OPEN BYPASS
VALVE

S106

YES

CALCULATE *NT* FROM
INTAKE AIR FLOWRATE *Qa*

S104

TURN OFF
ELECTRIC MOTOR

S107

CALCULATE
PREDICTED ROTATION
SPEED *NF*

S102

TURN ON
ELECTRIC MOTOR

S108

$NF \geq NT$?

NO

S109

CLOSE BYPASS VALVE

YES

END

FIG. 10

28

START

S201 | READ $Nc$

S202 | READ $\varDelta N$

S203 | READ $V$ AND $I$

S204 | CALCULATE $\varDelta NMAP$ FROM $Nc$ BY LOOKING UP MAP

S205 | $\varDelta N1 = \varDelta NMAP \cdot \dfrac{\varDelta Nc}{\varDelta N0}$

S206 | $\varDelta N2 = \varDelta N1 \cdot \dfrac{I}{I0}$

S207 | $\varDelta N3 = \varDelta N2 \cdot \dfrac{V}{V0}$

S208 | $NF = Nc + \varDelta N3 \cdot T$

RETURN

# FIG. 11

FIG. 12

FIG. 13A THROTTLE OPENING

REFERENCE OPENING

0

FIG. 13B ELECTRIC MOTOR

ON

OFF

PREDICTED SPEED NF

TARGET SPEED

NT

FIG. 13C ROTATION SPEED OF ELECTRIC MOTOR

t0

FIG. 13D BYPASS VALVE COMMAND VALUE

OPEN

CLOSE

FIG. 13E REAL STATE OF BYPASS VALVE

FULLY OPEN

FULLY CLOSED

t1  T  t2

TIME

EP 1 391 595 B1

LARGE

$\Delta N0$

0          ROTATION SPEED *Nc*          LARGE

# FIG. 14

LARGE

*I0*

0          ROTATION SPEED *Nc*          LARGE

# FIG. 15

FIG. 16

FIG. 17

FIG. 18

**1 TURBOCHARGER**
**1a COMPRESSOR**
**1c**
**1b EXHAUST GAS TURBINE**

13
5
6
51

AIR FLOWMETER

20

**2a COMPRESSOR**

3b ACTUATOR
8,9 PRESSURE SENSOR

11 ROTATION SPEED SENSOR

53 OPENING AND CLOSING SENSOR

**2 ELECTRIC SUPERCHARGER**

8

2c

50

ELECTRIC MOTOR

3b

2b    11

3

53

49 VOLT METER

Qa  P1

4

Nc

Vi

Acc

9

55

CONTROLLER

31a

SOC

SOC SENSOR

56 ACCELERATOR PEDAL DEPRESSION SENSOR

P2

21

54 THROTTLE OPENING SENSOR

Ne

TVO

12

48 ROTATION SPEED SENSOR

EP 1 391 595 B1

START

S301

NO ← IS ENGINE IN STEADY STATE ?

↓ YES

S302

IS FIRST FAULT CONDITION SATISFIED ? → YES

↓ NO

S303

IS SECOND FAULT CONDITION SATISFIED ? → YES

↓ NO

S304

IS THIRD FAULT CONDITION SATISFIED ? → YES

↓ NO

S305

$F = 1$

END

FIG. 19

START

S401

NO ← HAS COMPRESSOR 2a STOPPED ?

YES

S402

IS FIRST FAULT CONDITION SATISFIED ? → YES

NO

S403

IS SECOND FAULT CONDITION SATISFIED ? → YES

NO

S404

IS THIRD FAULT CONDITION SATISFIED ? → YES

NO

S406    $F = 1$

S405

NO ← HAS PREDETERMINED TIME ELAPSED ?

YES

END

FIG. 20

START

S501

NO

$F = 1$ ?

YES

S502

$SOC$ > PREDETERMINED VALUE ?

NO

YES

S506

$Vi$ > PREDETERMINED VOLTAGE ?

NO

YES

S507

DETERMINE TARGET VEHICLE RUNNING SPEED FROM $Acc$

S503

DETERMINE TARGET VEHICLE RUNNING SPEED FROM $Acc$

S508

REDUCTION CORRECT TARGET VEHICLE RUNNING SPEED ACCORDING TO $Vi$

S504

OPERATE ELECTRIC MOTOR 2b TO REALIZE TARGET VEHICLE RUNNING SPEED

END

# FIG. 21

START

S501

$F = 1$ ? — NO

YES

S604

OPERATE ELECTRIC
MOTOR 2b WITH
CONSTANT POWER
SUPPLY

END

# FIG. 22